Europäisches Patentamt

European Patent Office

Office européen des brevets

(19)

(11) **EP 1 553 595 A1**

(12) **EUROPEAN PATENT APPLICATION**
published in accordance with Art. 158(3) EPC

(43) Date of publication:
**13.07.2005 Bulletin 2005/28**

(51) Int Cl.7: **G11B 27/10**, G11B 20/10, G11B 27/00

(21) Application number: **03798481.2**

(22) Date of filing: **25.09.2003**

(86) International application number:
**PCT/JP2003/012199**

(87) International publication number:
**WO 2004/029970 (08.04.2004 Gazette 2004/15)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.09.2002 JP 2002280710**
**11.12.2002 JP 2002359472**
**07.05.2003 JP 2003129478**

(71) Applicant: **MATSUSHITA ELECTRIC INDUSTRIAL CO., LTD.**
**Kadoma-shi, Osaka 571-8501 (JP)**

(72) Inventors:
• **NAKAMURA, Tadashi**
**Nara-shi, Nara 631-0056 (JP)**
• **HINO, Yasumori**
**Ikoma-shi, Nara 630-0112 (JP)**

(74) Representative: **Pautex Schneider, Nicole et al**
**Novagraaf International SA**
**25, avenue du Pailly**
**1220 Les Avanchets - Geneva (CH)**

(54) **RECORDING/REPRODUCTION DEVICE, RECORDING/REPRODUCTION METHOD, AND RECORDING MEDIUM**

(57) A recording/playback apparatus of the present invention is a recording/playback apparatus for recording or playing back a video data file to/from a recording medium, comprising: a recording unit operable to record a video data file, an additional data file related to the video data file, and management information which includes recording resume information indicating a last recorded file; and a controlling unit operable to control the recording unit to record the recording resume information indicating the video data file which was most recently recorded as the last recorded file, into the management information when the video data file and the additional data file are recorded by the recording unit.

FIG. 11B

LAST RECORDING POSITION

LAST RECORDED FILE

SPACE AREA SEARCH

310

| UDF INFOR-MATION | DIRECTO-RIES, ETC. | GRP_DATA | (SPACE AREA 1) | MOV001.MPG | STL102.JPG | (SPACE AREA 2) |

LBN
0          PARTITION SPACE          Last LBN

**Description**

**Technical Field**

The present invention relates to a recording/playback apparatus and a recoding medium, and particularly to a recoding/playback apparatus and a recoding medium with which a next recording position can be determined from the position of the last recorded file.

**Background Art**

In recent years, disc media have increasingly received attention as recording media that record AV data, such as digitalized moving picture information and still picture information.

For example, AV data that has been encoded according to an encoding method, such as MPEG 2 or JPEG, is recorded to or played back from a disc medium, such as a DVD, hard disc, or MD (minidisc).

The recorded moving picture information and still picture information can be continuously recorded to such a disc medium, and can be played back from it in the order of recording.

Also, disc media are capable of random access as one of their excellent characteristics. Technologies using the random access capability may include realization of a resume function, for example.

For example, using a playback apparatus of the first conventional technology, a position at which the previous playback operation or recording operation was stopped is stored as playback resume information. At the time of a next playback, the playback is started from the position indicated by this playback resume information (the patent document 1, for instance.).

Moreover, using a recording apparatus of the second conventional technology, an operation mode immediately before ejection of a recording medium from the recording apparatus is recorded as resume information (the patent document 2, for example). For example, if the operation immediately before the ejection is playback or recording, the current operation mode and a stop position of the playback or recording are stored as resume information.

In this way, by a combination of the resume information record and the random access capability of disc media, a user can resume the playback or recording continued from the previous operation without having to perform a user's special operation. This improves the convenience of the user.

As another example of using the random access capability, AV data is stored as a file when recorded, and a plurality of files are grouped by arbitrary combinations for management.

Using a video/audio recording apparatus of the third conventional technology, for example, a file having a file name including a file number is classified into a group and then recorded to a recording medium (the patent document 3, for example).

At this time, the file number of a new file is set at a number obtained by increasing by one to the existing file number so that the number of the new file would not be the same as that of the existing file.

At the time of recording, each file is recorded to the recording medium in association with one of the groups. The groups into which the files are to be classified also have the different group numbers for the group management.

By managing the files in the form of groups in this way, it becomes possible to easily search for a desired file.

Also, by a disc file allocation method of the fourth conventional technology, an allocation start address is set in a memory and, after the disc file allocation, the start address is updated with an address of an area following the area having allocated to the disc file. This ensures the uniform allocation of the disc files over the whole area of a disc (the patent document 4, for example).

　　(the patent document 1): Japanese Laid-Open Application No. 2000-331466
　　(the patent document 2): Japanese Laid-Open Application No. 2000-11615
　　(the patent document 3): Japanese Laid-Open Application No. 2002-171473
　　(the patent document 4): Patent Application Publication No. 2945735

However, according to the video/audio recording apparatus of the above-stated patent document 3, when new moving picture information or still picture information is to be recorded, it will be only recorded as a new file or program after a file number or program number is set by increasing by one to the existing file number or program number. Thus, the problem is that when the user wishes to add a file to an arbitrary program or record a file in succession to a particular file, the user has to issue an instruction each time, which is burdensome to the user.

In order to solve such a problem, to record information of a position, at which the previous recording operation was stopped, as resume information may be considered, for example. However, according to the playback apparatus of the above-stated patent document 1, for example, the resume information is used as information for the next playback. Thus, the problem cannot be solved.

Meanwhile, the recording apparatus of the above-stated patent document 2 sets the operation performed immediately before the disc ejection as the resume information. Therefore, the stop position of the previous recording operation cannot be always recorded. Accordingly, the problem cannot be solved.

As a further problem, even in a case where the files are classified into groups as with the video/audio recording apparatus of the above-stated patent document 3, consideration is not given to data arrangement on a recording medium such as a disc medium. For this reason, when the files belonging to the same group are to be played back continuously, for example, there is a possibility that these files may be allocated at separate locations on the disc medium.

In such a case, when a playback is performed from a file to a next, a seek operation by a reading means (for example, an optical head in the case of an optical disc, or a magnetic head in the case of a hard disc) is required. When the files are continuously played back, the seek operation takes a long time. Thus, there is a problem that the speed of reading data cannot keep up with the demand for the file playback, causing a stop to the data display to the user.

According to the above-stated patent document 4, although the disc files can be allocated uniformly all over the areas on the disc, two files related to each other (like a video data file and a file including its attribute and a related audio data, for example) cannot be allocated to areas that are appropriate for a continuous playback without interruption.

In general, files that are classified into the same group correlate closely with each other and are considered to be continuously played back in many cases. Therefore, the playback of these files without interruption is important for the convenience of the user.

### Disclosure of Invention

The present invention has been conceived in view of such situation, and it is an object of this invention to provide a recording/playback apparatus that, even after the user stops a recording operation, can resume the recording operation from an appropriate position and also perform data allocation suitable for the uninterrupted playback of a plurality of relevant files that are required for the playback.

This object can be achieved by a recording/playback apparatus of the present invention which is a recording/playback apparatus for recording or playing back a video data file to/from a recording medium and made up of: a recording unit operable to record a video data file, an additional data file related to the video data file, and management information which includes recording resume information indicating a last recorded file; and a controlling unit operable to control the recording unit to record the recording resume information indicating the video data file which was most recently recorded as the last recorded file, into the management information when the video data file and the additional data file are recorded by the recording unit.

With this construction, the recording resume information indicates a video data file as the last recorded file, not an additional data file nor management information. By reference to this recording resume information when resuming the recording operation, a new video data file can be recorded into a recording area next to a recording area of the already recorded video file. As a result, at the time of the playback, the video data can be continuously played back without interruption that is caused by the seek operation.

Here, the recording resume information may include file identifying information indicating the video data file that was most recently recorded.

With this construction, by reference to the recording resume information at the time of resuming the recording operation, the last recording position on the recording medium can be easily specified from the identifying information of the last recorded video data file with reference to the recording position, the file size, etc. of the current video data file from the file system and the like.

Here, the additional data file may be used for reserving a recording area for a post recording, and the recording unit may record the video data file and the additional data file in an interleaved manner.

With this construction, since the additional data file is used for reserving a recording area for the post recording, it becomes possible to update only the additional data file using BGM, audio, and still pictures. The video data file and the stated additional data file are recorded in an interleaved manner. Thus, the video data file and the additional data file can be continuously read out without the seek operation and, therefore, can be continuously played back without interruption.

Here, the recording unit may further record an attribute information file which indicates an attribute of the video data file into a predetermined area.

With this construction, without having to access the video data file, the attribute of the video data file can be obtained by accessing the attribute information file recorded in the predetermined area.

Here, immediately before a new video data file and a new additional data file are recorded, the controlling unit may further obtain a last recording position of the last recorded file on the basis of the recording resume information, search for a space area unidirectionally from the last recording position, and determine a start of the space area as a recording start position, and the recording unit may record the new video data file and the new additional data file from the determined recording start position.

With this construction, the new video data file and the new additional data file can be recorded by the loop recording, and in addition to it, they can be recorded into a space area suitable for the continuous playback.

Here, the management information may further include a loop recording flag indicating whether or not the last recorded file was recorded by a loop recording, and the controlling unit may control a setting of the loop recording flag.

With this construction, since it becomes possible to select, at the time of recording, whether to employ the loop recording where the video data file and the additional data file are recorded into the space area that has been searched for as described above. Then, it can be determinable at the time of the playback.

Here, the management information may further include a valid flag indicating whether or not the file identifying information is valid, and the controlling unit may control an update of the valid flag.

Here, the management information may further include entry information indicating a group to which the last recorded video data file belongs, and the controlling unit may control a setting of the entry information.

Here, the management information may further include a valid flag indicating whether or not the entry information is valid, and the controlling unit may control a setting of the valid flag.

Here, the management information may further include date and time information indicating a recording date and time when the last recorded video data file was recorded, and the controlling unit may control a setting of the date and time information.

Here, the management information may further include a valid flag indicating whether or not the date and time information is valid, and the controlling unit may control a setting of the valid flag.

Here, the recording resume information may include position information indicating a last recording position of the last recorded video data file on the recording medium.

Here, the recording resume information may include identifying information indicating a group to which the last recorded video data file belongs.

With this construction, the entry information, the date and time information, the position information, etc. in addition to the file identifying information can be recorded into the management information. Also, a valid flag corresponding to each can be recorded.

Here, the controlling unit may assign a unique ID to each of the video data file and the additional data file, and the recording resume information may include a unique ID of the last recorded video data file.

With this construction, the unique ID allows the file management in the management information. Owing to this, even after the video data file and the additional data file are recorded many times, the file management can be easily achieved.

Also, a recording/playback method of the present invention, a recording/playback program of the present invention, and a recording medium of the present invention that records video data have the same constructions, functions, and effects as described above.

**Brief Description of Drawings**

FIG. 1 shows an external view of a recording/playback apparatus, and also shows an example of its interface with associated equipment.

FIG. 2 is a block diagram showing the function of the recording/playback apparatus.

FIG. 3A is a diagram showing an address space on a disc medium 100.

FIG. 3B shows a state when the continuous playback of the AV data is made possible by a supply of data accumulated in a track buffer to a decoder.

FIG. 4 is a diagram illustrating the recording/playback operations of the recording/playback apparatus.

FIG. 5A shows a recording area of a recordable disc medium 100.

FIG. 5B is an explanatory drawing showing a horizontal arrangement of a lead-in area, a lead-out area, and a data area that are concentrically shown in FIG. 5A.

FIG. 6 shows a logical data space of the disc medium 100 that is composed of logical sectors.

FIG. 7 shows a structure of directories and files to be recorded to the disc medium 100.

FIG. 8 is a drawing to explain a general outline of a data structure of a management information file.

FIG. 9 is a drawing to explain a general outline of a data structure of a group management information table.

FIG. 10 is a drawing to explain a general outline of a data structure of a resume information management table.

FIG. 11A shows a structure of directories and files on the disc medium 100.

FIG. 11B shows a general outline of a data allocation in a partition space corresponding to the state shown in FIG. 11A.

FIG. 12A shows group management information corresponding to the state shown in FIG. 11.

FIG. 12B shows set values of recording resume information corresponding to the state shown in FIG. 11.

FIG. 13A shows a structure of directories and files on the disc medium 100 immediately after a new media file was recorded to the state shown in FIG. 11.

FIG. 13B shows a general outline of a data allocation in a partition space corresponding to the state shown in FIG. 13A.

FIG. 14A shows the group management information corresponding to the state shown in FIG. 13.

FIG. 14B shows set values of the recording resume information corresponding to the state shown in FIG. 13.

FIG. 15 is a drawing to explain an embodiment of recording resume information that is different from the one shown in FIG. 10.

FIG. 16 is a drawing to explain an embodiment of group management information that is different from the one shown in FIG. 12.

FIG. 17 is a drawing to explain an embodiment of recording resume information that is different from the one shown in FIG. 10.

FIG. 18 is a drawing to explain a relation between the recording resume information and a spare area.

FIG. 19 is a drawing to explain a relation between recording resume information different from the one shown in FIG. 18 and a spare area.

FIG. 20 is a drawing to explain a general outline of a data structure of a management information file that is different from the one shown in FIG. 8.

FIG. 21 is a drawing to explain a general outline of a data structure of a file management information table included in the management information file of FIG. 20.

FIG. 22 is a drawing to explain a general outline of a data structure of a group management information table included in the management information file of FIG. 20.

FIG. 23 is a drawing to explain a general outline of a data structure of recording resume information included in the management information file of FIG. 20.

FIG. 24 shows a structure of directories and files recorded to the disc medium 100.

FIG. 25A shows an example of a data structure for managing a directory hierarchy defined by the UDF standard.

FIG. 25B shows an example of an arrangement of the data structure in the partition space for managing the directory hierarchy defined by the UDF standard.

FIG. 26A shows an example of a data structure of a file set descriptor FSD defined by the UDF standard.

FIG. 26B shows an example of a data structure of long_ad defined by the UDF standard.

FIG. 26C shows an example of a data structure of ADImpUse defined by the UDF standard.

FIG. 27A shows an example of a data structure of an extended file entry (EFE) defined by the UDF standard.

FIG. 27B shows an example of a data structure of an allocation descriptor (AD) defined by the UDF standard.

FIG. 27C shows an example of a data structure of a file identifier descriptor (FID) defined by the UDF standard.

FIG. 28 shows a hierarchical structure of data to be recorded to the disc medium 100 as well as showing the system controlling unit 104 that processes these and its internal structure.

FIG. 29A shows an example of a data structure of a media object manager 1200.

FIG. 29B shows an example of a data structure of recording resume information 1210.

FIG. 29C shows an example of contents of an attribute flag.

FIG. 30A shows an example of a data structure of media object information (MO_INFO) 1220.

FIG. 30B shows examples of a value to be set to the MoType.

FIG. 30C shows examples of the conversion rule applied when a value is set to the field of an OBJ_ID form.

FIG. 31A shows an example of a data structure of a program manager 1300.

FIG. 31B shows an example of a data structure of program information (PRG_INFO) 1310.

FIG. 32 shows a relation of directories and media objects with the media object information 1220.

FIG. 33 shows a relation of the program manager 1300 with the media object manager 1200.

FIG. 34 shows an example of an allocation of a moving picture object in the partition space.

FIG. 35 shows an example of an allocation of a moving picture object in the partition space.

FIG. 36 is a flowchart showing processing performed for locating the last recording position from the last recorded file identifying information 1213.

FIG. 37 is a flowchart showing processing performed for recording a moving picture object in the present embodiment.

FIG. 38 shows an example of an allocation of a moving picture object in the partition space.

FIG. 39 shows a hierarchical structure of directories and files recorded to the disc medium 100 in a case where a plurality of media object managers exist.

FIG. 40A shows a data structure of an Implementation Use Extended Attribute defined by the UDF standard.

FIG. 40B shows a data structure of an extended attribute stored into an Implementation Use 2100.

**Best Mode for Carrying Out the Invention**

The following is a description of preferred embodiments of a recording/playback apparatus, a recording method, a recording medium, and a distribution medium of the present invention, with reference to the drawings.

(First Embodiment)

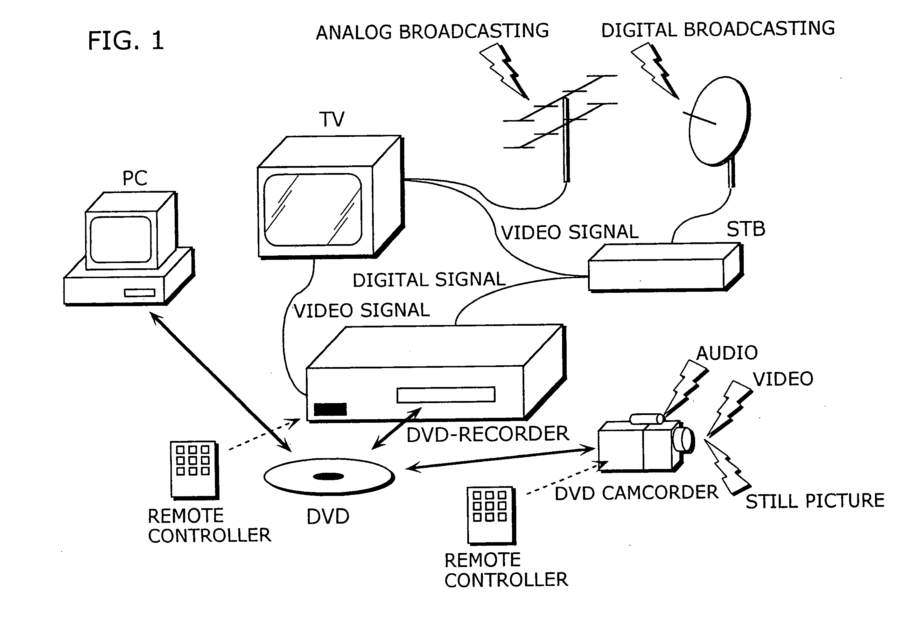

FIG. 1 shows an external view of a DVD recorder that is an example of a recording/playback apparatus of the present invention, and also shows an example of its interface with associated equipment.

As shown in FIG. 1, a DVD that is a disc medium is set to the DVD recorder so that a recording or playback operation for video information or the like is performed.

Operations of the DVD recorder are usually performed using a remote controller or switches provided for the apparatus.

As video information inputted to the DVD recorder, there are both an analog signal and a digital signal. As the analog signal, there is analog broadcasting. As the digital signal, there is digital broadcasting.

In general, the analog broadcasting is received and decoded by a receiver built in a television apparatus, and then inputted into the DVD recorder as an analog video signal according to the NTSC system or the like.

Also, the digital broadcasting is decoded into a digital signal by an STB (Set Top Box) that is a receiver, and then inputted into the DVD recorder to be recorded.

Meanwhile, the video information recorded to the DVD disc is played back by the DVD recorder and externally outputted. As is the case with the inputted signal, there are both an analog signal and a digital signal as the outputted signal. The analog signal is inputted directly into the television apparatus while the digital signal goes through the STB to be decoded into the analog signal before being inputted into the television apparatus. Then, it is displayed as video on the television apparatus.

Moreover, as an apparatus that uses DVD discs, there is a DVD camcorder. The DVD camcorder is an apparatus realized by a combination of a DVD recorder and a camera apparatus that is composed of a lens and a CCD. It encodes and records information of moving pictures taken.

A DVD disc is sometimes used for recording and playing back video information by a personal computer (PC) or the like other than the DVD recorder and the DVD camcorder. Even if the video information is recorded to the DVD disc by the PC or the like, the DVD recorder can play this back when the disc is set to the DVD recorder.

It should be noted that the video information by the above-mentioned analog broadcasting and digital broadcasting are usually accompanied with audio information. The accompanied audio information can be also recorded and played back by the DVD recorder, as is the case with the video information.

Although the video information is generally moving pictures, it is sometimes a still picture. That is a case where a still picture is recorded using a photograph function of the DVD camcorder, for example.

It should be noted that an IEEE 1394, ATAPI, SCSI, USB, cable LAN, or wireless LAN can be used as a digital I/F set between the DVD recorder and external equipment such as an STB.

As described above, an analog (composite) video signal according to the NTSC system was given as an example of a signal between the DVD recorder and the television apparatus. However, the signal may be a component signal that separately transmits a brightness signal and a color-difference signal.

Moreover, for an image transmitter I/F set between the AV equipment and the television apparatus, research and development have been promoted in order to replace an analog I/F with a digital I/F, such as a DVI. On account of this, it is naturally expected that the DVD recorder and the television apparatus will be connected by a digital I/F.

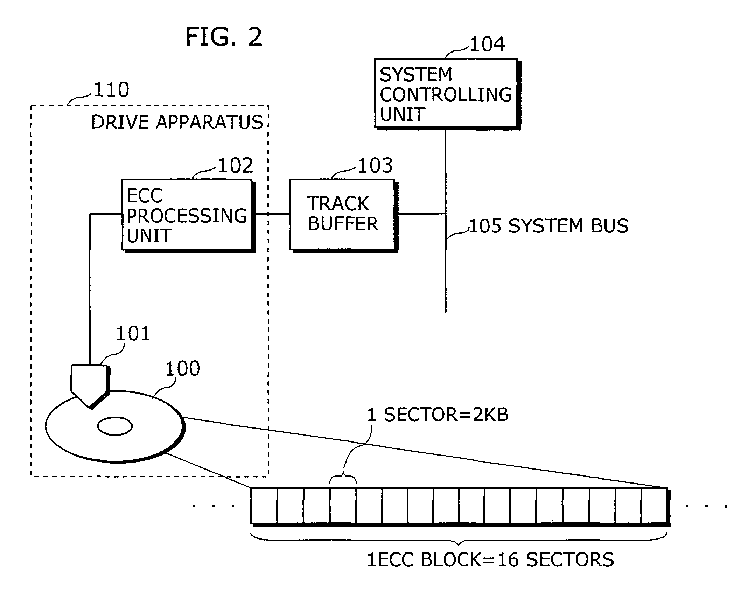

FIG. 2 is a block diagram showing the function of a drive apparatus 110 that is incorporated into the DVD recorder shown in FIG. 1, for example.

This drive apparatus 110 is composed of: an optical pickup 101 that is a recording/playback means; and an ECC (Error Correcting Code) processing unit 102. It records and plays back data using a disc medium 100 that is a recording medium like a DVD disc.

Moreover, the drive apparatus 110 is connected with a track buffer 103. The track buffer 103 is connected, via a system bus 105, with a system controlling unit 104 which controls the whole system like the DVD recorder.

Moving picture data read out from the drive apparatus 110 is sent to a moving picture decoder 240 that will be described later, and then decoded.

As shown in FIG. 2, data is recorded to the disc medium 100 in the minimum unit called a sector. A plurality of sectors makes up one ECC block. Error correcting processing is performed by the ECC processing unit 102, with an ECC block being set as one unit.

In the case of a DVD-RAM disc which is an example of disc media, the size of a sector is 2KB and it is structured as: 16 sectors = 1 ECC block.

This sector size may be 512B (Byte), 8KB, etc. depending on the type of the disc medium 100. Also, an ECC block may be made up of 1 sector, 16 sectors, 32 sectors, or the like. In the future, the sector size and the number of sectors making up the ECC block are expected to increase with increasing density of information to be recorded.

The track buffer 103 is a buffer that records the AV data with a variable bit rate (VBR) so as to record the AV data to the disc medium 100 with a higher degree of efficiency. The rate of reading/writing to the disc medium 100 (Va) is a fixed rate while the bit rate of the AV data (Vb) varies according to the complexity of the contents (images in the case of video). Thus, the buffer is used for smoothing out this difference in the bit rate.

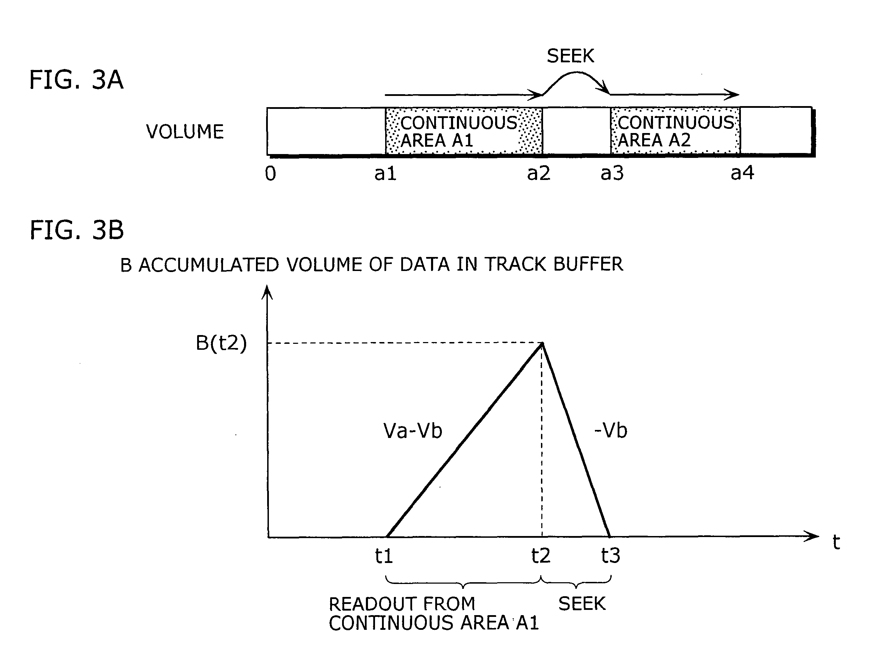

In the case of the system shown in FIG. 2, it becomes possible to discretely allocate the AV data on the disc medium 100 by making more effective use of the track buffer 103. This is explained with reference to FIG. 3.

FIG. 3A is a diagram showing an address space on the disc medium 100. In this figure, the address value is 0 at the left side end, and the address value is increasing in the rightward direction. Also, 0, a1, and a2 are the address values at the respective positions. As shown in FIG. 3A, in a case where the AV data is recorded separately into a continuous area A1 of [a1, a2] and a continuous area A2 of [a3, a4], the continuous playback of the AV data is made possible by a supply of data accumulated in the track buffer to the moving picture decoder 240 while the seek operation is being performed from a2 to a3.

The state at this time is shown in FIG. 3B. The AV data started to be read out from the position a1 is inputted into the track buffer 103 at the time t1, and at the same time, data is started to be outputted from the track buffer 103. Owing to this, data will be accumulated into the track buffer 103 by the volume corresponding to a rate difference (Va - Vb) between a rate of inputting into the track buffer 103 (Va) and a rate of outputting from the track buffer 103 (Vb). This state is maintained until the search area reaches a2, that is, until the time t2.

In the meantime, supposing that the volume of data accumulated in the track buffer 103 is B (t2), the volume of data B (t2) accumulated in the track buffer 103 should keep being consumed and supplied to the moving picture decoder 240 during a period of time from the time t2 to the time t3 at which data readout from the area a3 is started.

In other words, as long as the volume of data read out before the seek operation ([a1, a2]) is maintained at a constant volume or more, continuous supply of the AV data is possible even when the seek operation takes place.

The size of the continuous area to which a continuous supply of AV data is possible is expressed by the following equation in terms of the number of ECC blocks (N_ecc). In this equation, N_sec represents the number of sectors that make up an ECC block, S_size represents the sector size, and Tj represents the seek performance (the maximum seek time).

$$N\_ecc = Vb \cdot Tj / ((N\_sec \cdot 8 \cdot S\_size) \cdot (1 - Vb / Va))$$

Also, there may be defective sectors caused in the continuous area. With consideration additionally given to this case, the continuous area is expressed by the following equation. In the equation below, dN_ecc represents the size of acceptable defective sectors, and Ts represents the time required to skip the defective sectors in the continuous area. This size is also expressed by the number of ECC blocks.

$$N\_ecc = dN\_ecc + Vb \cdot (Tj + Ts) / ((N\_sec \cdot 8 \cdot S\_size) \cdot$$

$$(1 - Vb / Va))$$

It should be noted that an explanation has been given here for a case where data is read out from a disc medium, that is, a case of playback. A case where data is written to the disc medium, that is, a case of recording data or recording video image, is also considered in the same way. As described above, a continuous playback or a playback is possible even when the AV data is recorded in a distributed manner on the disc as long as the data of the constant volume or more is continuously recorded on the disc medium. Note that, in the case of a DVD for example, this continuous area is referred to as CDA.

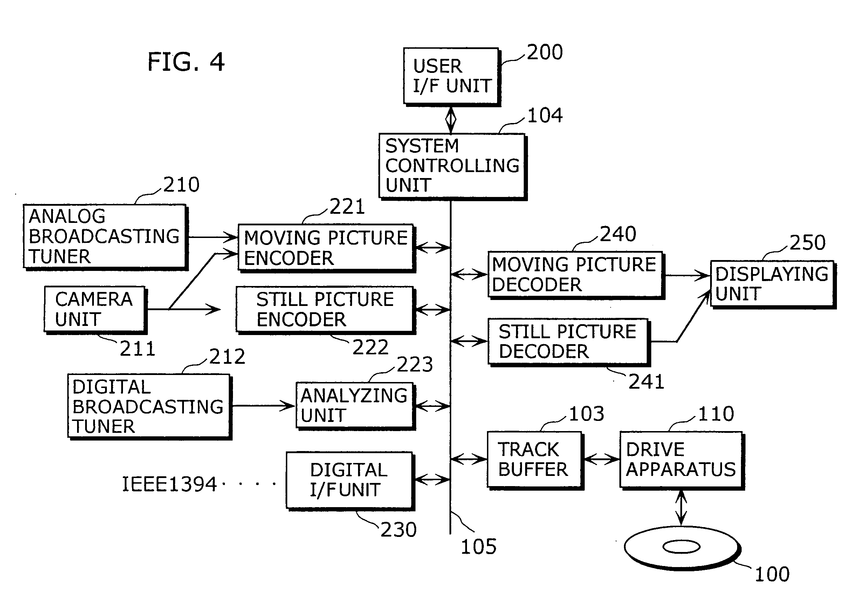

FIG. 4 is a block diagram showing the construction of a recording/playback apparatus, such as the DVD recorder or the DVD camcorder shown in FIG. 1, that includes the drive apparatus 110.

As shown in FIG. 4, a moving picture encoder 221, a still picture encoder 222, an analyzing unit 223, a digital I/F unit 230, the moving picture decoder 240, a still picture decoder 241, etc. are connected with each other, with a system bus 105 being in the center. A system controlling unit 104 controls the whole (via a controlling line that is not shown).

As input sources of the AV data, an analog broadcasting tuner 210, a camera unit 211, and a digital broadcasting tuner 212 are respectively connected with each encoder and the analyzing unit. It should be noted that not all of these encoders and tuners have to be provided, but only necessary ones will suffice.

A request from the user is sent to the system controlling unit 104 through a user I/F unit 200. The result of decoding the moving and still pictures is shown to the user through a displaying unit 250. The procedure for recording/ playing back the data by the present system will be explained later on.

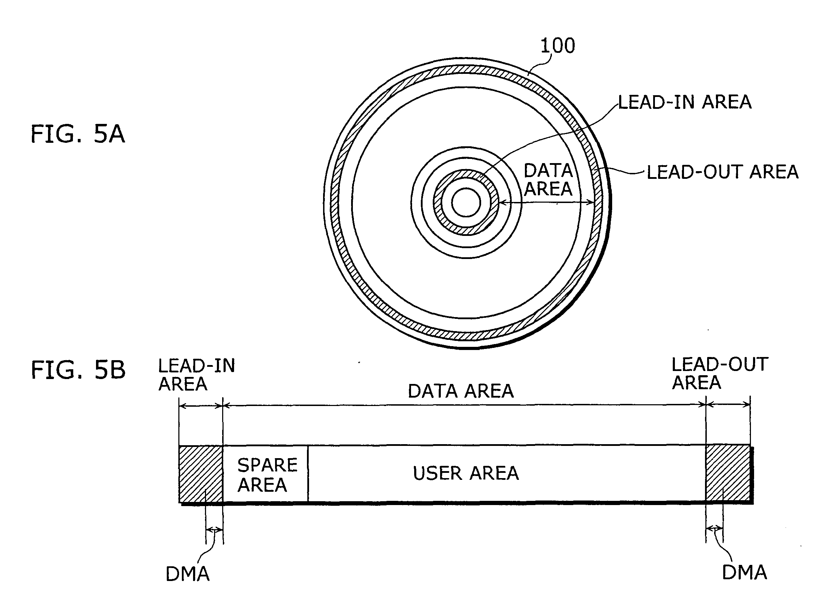

FIG. 5 shows an external view and a physical structure of a recordable disc medium. A disc medium like a DVD-RAM, for example, is set to the recording/playback apparatus in a condition of being housed in a cartridge for the purpose of protecting its recording surface. However, if the protection of the recording surface is achieved by another structure or is acceptable, it may be directly set to the recording/playback apparatus without being housed in the cartridge.

FIG. 5A shows an example of a recording area of a recordable disc medium. In the case of the example shown in FIG. 5A, a lead-in area is arranged in the innermost diameter, a lead-out area is in the outermost diameter, and a data area is in between.

The lead-in area records a reference signal required for the stabilization of a servo during access by the optical pickup and an identifying signal for distinguishing from other disc media. The lead-out area also records the same type of a reference signal, etc. as the ones recorded in the lead-in area.

The area on the disc medium is divided into sectors, each of which is the minimum unit of access.

FIG. 5B is an explanatory drawing showing a horizontal arrangement of the lead-in area, the lead-out area, and the data area that are concentrically shown in FIG. 5A.

The lead-in area and lead-out area each have a defect management area (DMA: Defect Management Area) inside. The defect management area records: position information showing the positions of sectors found to include defects; and replacement position information showing the positions of the sectors replacing the defective sectors located in a spare area which will be described later.

The data area has the spare area and a user area on the inside. The spare area is used to replace defective sectors when they are found. The user area is an area that can be used as a recording area by the file system.

It should be noted that there are discs that have no spare areas, depending on the types of disc media. In this case, the replacement processing for the defective sectors may be performed in a file system layer such as a UDF (Universal Disk Format) when needed, as described later.

In general, in order to access each sector on the disc medium, physical sector numbers (PSN: Physical Sector Number) are assigned to the data area in order starting from the inner track. The sectors managed using the PSNs are referred to as physical sectors.

Also, logical sector numbers (LSN: Logical Sector Number) are assigned to the physical sectors of the user area in order starting from the inner track to consecutively show only the sectors used for recording the data. The sectors managed using the LSNs are referred to as logical sectors.

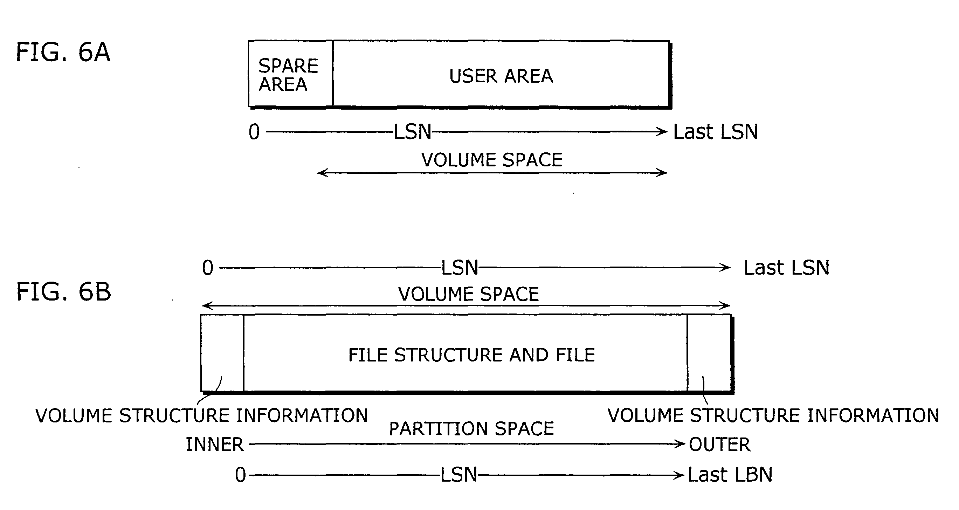

FIG. 6 shows a logical data space of a disc medium that is composed of logical sectors.

The logical data space is referred to as a volume space, and user data is recorded on the volume space. In the volume space, the recorded data is managed by the file system. To be more specific, a partition space in the volume space records information that is used in order to manage a group of sectors storing data as a file and further manage a group of files as a directory. Also, volume structure information used in order to manage the partition space, etc. is recorded at the start and end of the volume space.

A file system of disc media, such as a DVD-RAM, is referred to as a UDF, and the one complying with ISO13346 is usually used.

It should be noted that the sectors of the above-mentioned group are not always consecutively allocated in the volume space, but they are discretely allocated in part. For this reason, out of the sectors making up a file, the file system manages a group of sectors consecutively allocated in the partition space as an extent, and manages the file as a set of related extents.

Moreover, in the partition space of the UDF, a logical block number (LBN: Logical Block Number) is assigned to each unit of data access so that the allocation and management of the data are performed.

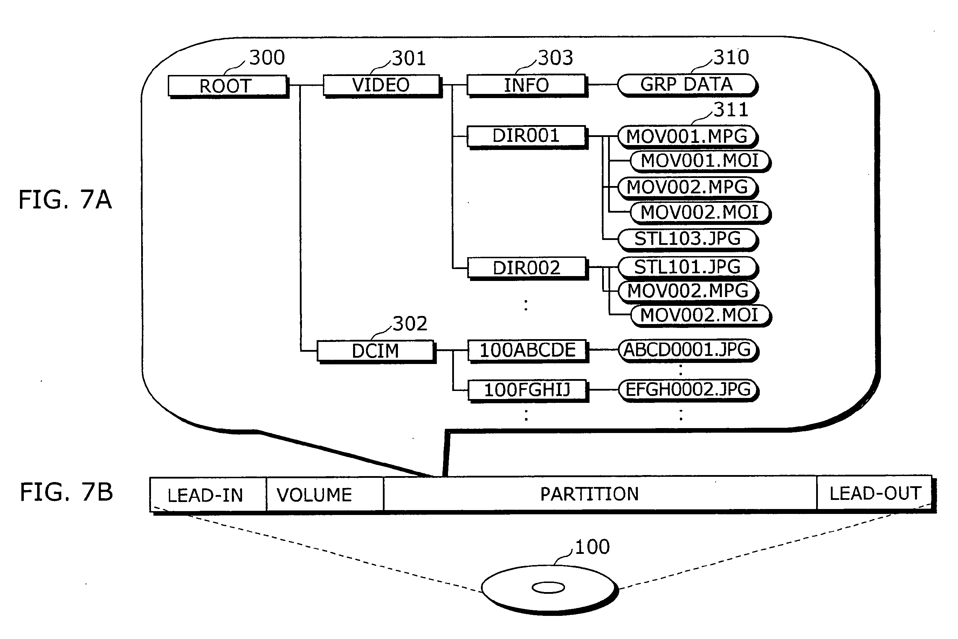

FIG. 7 shows an example of a structure of the directories and files to be recorded to the disc medium of the present invention.

Under a root directory 300, a VIDEO directory 301 and a DCIM directory 302 are stored. Under these, various kinds of media files 311 including moving pictures and still pictures, and a management information file 310 (file name: GRP_DATA) indicating a group management, a playback sequence, and each attribute of a plurality of media files are stored.

In the present embodiment, every media file including AV data that is subject to the recording and playback is stored in a directory DIRxxx (xxx is hexadecimal), for example.

Out of the media files, a moving picture file including MPEG2 moving picture information or the like is recorded as MOVnnn. MPG (nnn is hexadecimal), and the attribute information of each moving picture file is recorded in an attribute information file MOVnnn.MOI. The moving picture file is the AV data compressed according to the MPEG2 method, the MPEG4 method, or the like, and recorded as a program stream (PS), a transport stream (TS), or a file in another format.

The attribute information file that is recorded together with the moving picture file has: identifying information of the current moving picture file; recording date and time; representative moving pictures of the moving picture data; and access map information and its management information for converting an object playback time of day into an address on the disc.

By having the access map information, it becomes possible to perform conversion between a time axis of the moving picture data and a data (bit stream) axis. Then, it becomes possible to perform random access with reference to the time axis relative to the moving picture data.

The moving picture file and the attribute information file are associated with each other by their file names. A part of their file names apart from the extensions, the part "MOV001" for example, is set the same for the associated moving picture file and attribute information file. However, the way to establish the association between the moving picture file and the attribute information file is not limited to the stated method, and other methods can be used. For example, the association between the two may be stored as table information, or link information used for referring to the corresponding moving picture file (a pathname to the moving picture file) may be stored in the stated attribute information file.

Out of the media files, a still picture file including JPEG still picture information or the like is recorded as STLnnn. JPG. The still picture file is image data compressed according to the JPEG method or the like, and recorded as a file in the DCF (Design rule for Camera File system) format or the Exif (Exchangeable image file format for digital still camera) format.

Moreover, the still picture file may be recorded according to the DCF standard. Under the root directory 300, a DCF image root directory 302 (a directory name: DCIM) is stored, and under this, a DCF directory to store the still picture file is stored (a directory name: 100ABCDE, for example).

Under the DCF directory, a DCF object (a file name: ABCD0001.JPG, for example) which is a still picture file is stored. The DCF object is a file group which is recorded according to the rules defined by the DCF and composed of a DCF basic file, a DCF extended image file, and a DCF thumbnail file. The DCF master file is an image file that is recorded directly under the DCF directory, has a DCF file name and an extension "JPG" defined by the DCF standard, adheres to the Exif standard, and has a data structure defined by the DCF standard.

The DCF extended image file is an image file that is recorded directly under the DCF directory and has a DCF file name, but it has an extension and a data structure which are different from those of the DCF master file. The DCF thumbnail file is a compressed file for recording thumbnails of the DCF extended image file.

It should be noted that all of these DCF master file, DCF extended image file, and DCF thumbnail file do not have to be recorded. Other than the DCF object, a Motion JPEG file is sometimes recorded, for example.

File management information for managing the recorded media files is recorded as a management information file 310 (a file name: GRP_DATA) under a management data directory 303 (a directory name: INFO).

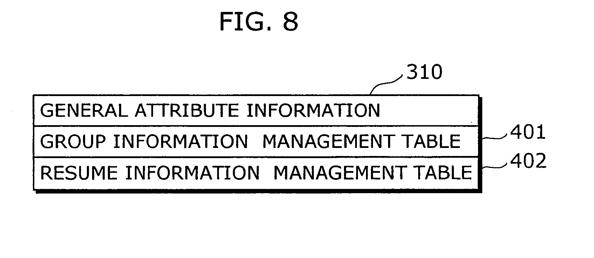

FIG. 8 shows a structure of the management information file 310 (the file name: GRP_DATA) that stores information for managing the association between each media file and its group when the media file to be recorded by the recording/playback apparatus of the present invention is classified into the group.

The management information file 310 shown in FIG. 8 is composed of general attribute information, a group information management table 401, and a resume information management table 402.

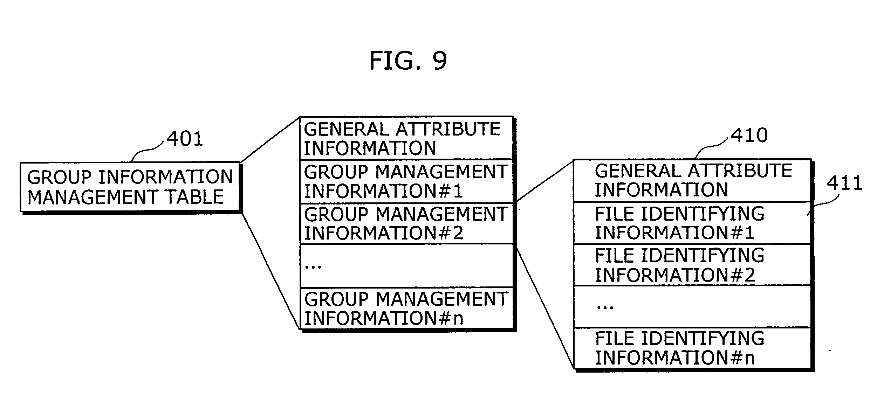

As shown in FIG. 9, the group information management table 401 is composed of: group management information for managing files belonging to an individual group; and general attribute information for managing the number of sets of the group management information, etc.

Moreover, the group management information is composed of general attribute information and file identifying information 411 for identifying the files belonging to the group corresponding to the current group management information.

The general attribute information includes the number of sets of the file identifying information included in the current group management information. Other than this, a name of the current group, a comment, creation date and time, etc. may be included.

Moreover, the current group may be associated on one-to-one with a directory that is managed by the file system of the disc medium. In this case, information regarding a name of the corresponding directory (for example, a pathname from the root directory to the current directory) may be included.

Meanwhile, each set of the file identifying information 411 includes path information for each media file included in the current group. As the form of the path information, a full pathname is preferable, like "/VIDEO/DIR001/MOV001.MPG" where "/" is used as a path delimiter character.

Alternatively, another format may be used as long as a media file identified by the path information is uniquely specified. For example, in the case of FIG. 7, each file has a file number and its parent directory also has a director number. Moreover, if a unique directory number is assigned to each of the VIDEO directory 301 and the DCIM directory 302 and a unique file type number (or an extension number) is assigned to each extension such as "MPG" or "JPG", it is possible to designate each media file as a numerical string.

Suppose that a parent directory number "0" is assigned to the VIDEO directory 301 and a file type number "1" is assigned to the extension "MPG". In this case, the above-mentioned pathname "/VIDEO/DIR001/MOV001.MPG" can be express as:

the parent directory number: 0
the directory number: 001
the file number: 001 and
the file type number: 1.

Such format may be employed for values to be stored in the file identifying information 411. Other than this, a format by a combination of a directory number and a file name may be also employed.

Moreover, each set of the file identifying information 411 may include attribute information (time length taken for playback, for example) regarding the corresponding media file.

Note that the attribute information file (MOV001.MOI in FIG. 7, for example) does not need to be entered in the file identifying information 411. This is because as long as the corresponding media file (in this case, MOV001.MPG in FIG. 7) is entered in the file identifying information 411, the attribute information file can be found on the basis of the association established using the file name as described above.

Or, by contrast, the attribute information file may be entered into the file identifying information 411. This is because the corresponding media file can be found in the same way.

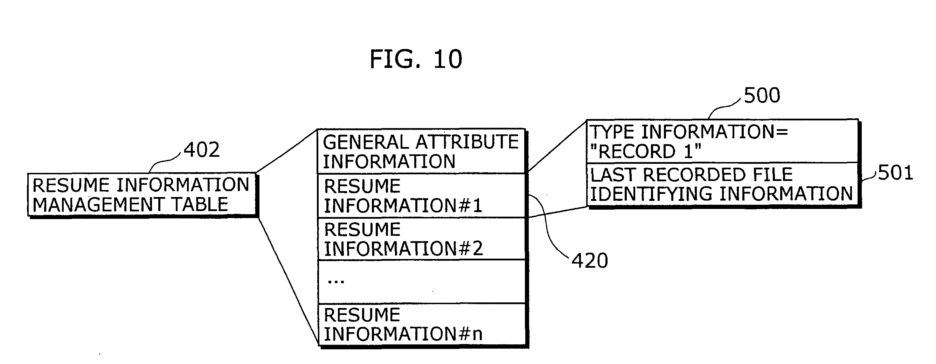

FIG. 10 shows a structure of the resume information management table 402 in which identifying information of the last recorded media file is recorded as recording resume information by the recording/playback apparatus of the present invention.

The resume information management table 402 is composed of general attribute information and individual sets of resume information 420.

When a plurality of sets of the resume information 420 is included in the resume information management table 402, the general attribute information stores the total number of them, etc. When the plurality of sets of the resume information 420 is stored, the playback resume information, besides the recording resume information described later, may be stored as described earlier for the case of the conventional technology.

When a plurality of types of the resume information 420 exists, each set of the resume information is distinguished from the others by a value set in type information of the resume information 420 that will be described later.

The type information of one set of the resume information 420 included in the resume information management table 402 in the present embodiment is set at "record 1" which is used as recording resume information 500.

The recording resume information 500 stores last recorded file identifying information 501 which is identifying information of a media file that was most recently recorded by the recording/playback apparatus of the present invention. As is the case with the above-mentioned file identifying information 411, the last recorded file identifying information 501 stores information to identify the corresponding media file by a combination of a pathname, a directory number, and a file number.

The details as to the usage of the recording resume information 500 will be described later.

Next, an explanation is given for the structure and operation of the recording/playback apparatus of the present invention that performs a recording to the disc medium 100, with reference to FIG. 4.

The recording/playback apparatus shown in FIG. 4 is composed of: the user I/F unit 200 that provides displays for the user and receives requests from the user; the system controlling unit 104 that is responsible for managing and controlling the whole system; the analog broadcasting tuner 210 that receives VHF and UHF; the digital broadcasting tuner 212 that receives the digital satellite broadcasting; the moving picture encoder 221 that converts an analog signal into a digital signal so as to encode it into an MPEG program stream; the analyzing unit 223 that analyzes an MPEG transport stream transmitted by the digital satellite; the displaying unit 250, such as a television set and a speaker; and the moving picture decoder 240 that decodes MPEG moving picture data or the like.

In a case where the recording/playback apparatus is camera equipment, such as a DVD camcorder, it is composed of: the camera unit 211 that inputs images; and the still picture encoder 222 that encodes an AV signal transmitted from the camera unit 211 into a JPEG stream.

By transmitting the AV signal from the camera unit 211 to the moving picture encoder 221, an image taken by the camera is encoded into an MPEG program stream.

Meanwhile, in a case where the system makes up the camcorder equipment, the analog broadcasting tuner 210 and the digital broadcasting tuner 212 may not be provided.

The system shown in FIG. 4 is further provided with: the track buffer 103 that temporarily stores write data; and the drive apparatus 110 that writes data to the disc medium 100.

Moreover, it may be provided with the digital I/F unit 230 that is an interface for outputting data to external equipment using a means of communication, such as IEEE1394 or USB.

In the recording/playback system constructed like this, the user I/F unit 200 first receives a request from the user.

The user I/F unit 200 informs the system controlling unit 104 of the request from the user. Then, the system controlling unit 104 analyzes the request from the user as well as issuing a processing request to each module.

Next, an explanation is given for an operation as to the recording by self-encoding where the analog broadcasting is encoded in the MPEG-2 PS format and recorded as a media file.

The system controlling unit 104 requests the analog broadcasting tuner 210 for reception and the moving picture encoder 221 for encoding. The moving picture encoder 221 performs video-encoding, audio-encoding, and system-encoding on the AV data transmitted from the analog broadcasting tuner 210 before transmitting it to the track buffer 103.

After starting the encoding, the moving picture encoder 221 sends information necessary to create access map information or the like to the system controlling unit 104, in parallel with the encode processing.

Next, the system controlling unit 104 requests the drive apparatus 110 for recording. The drive apparatus 110 fetches the data accumulated in the track buffer 103 and records it to the disc medium 100.

At this moment, the unit searches the recordable area on the disc for the above-mentioned continuous area (CDA) and records the data into the retrieved continuous area. Here, the start position of searching the recordable area for the CDA is determined on the basis of the recording resume information 500. The details of the method will be described later on.

The end of the recording is instructed through a stop request from the user. The recording stop request from the user is transmitted to the system controlling unit 104 via the user I/F unit 200. The system controlling unit 104 issues a stop request to the analog broadcasting tuner 210 and the moving picture encoder 221.

Receiving the encode stop request from the system controlling unit 104, the moving picture encoder 221 stops the encode processing.

After the end of the encode processing, the system controlling unit 104 creates attribute information including access map information and its management information, on the basis of the information received from the moving picture encoder 221.

Next, the system controlling unit 104 requests the drive apparatus 110 to stop recording the data accumulated in the track buffer 103 and to record the attribute information. The drive apparatus 110 records the data remaining in the track buffer 103 and the attribute information as an attribute information file (the file MOV001.MOI in FIG. 7, for example) to the disc medium, and then ends the recording processing for the media file.

Next, an explanation is given as follows for an operation related to the recording of a still picture, where the AV data transmitted from the camera unit 211 is recorded after the JPEG encoding.

The system controlling unit 104 requests the camera unit 211 to output the AV data and the still picture encoder 222 to encode it.

The still picture encoder 222 performs the JPEG encoding on the AV data transmitted from the camera unit 211 and then sends it to the track buffer 103.

Receiving an instruction from the system controlling unit 104, the drive apparatus 110 records the data accumulated in the track buffer 103 to the disc medium 100.

At this moment, the unit searches the recordable area on the disc for a recordable space area and records the data into the retrieved space area. Here, the start position of searching for the recordable space area is determined on the basis of the recording resume information 500. The details of the method will be described later on.

When one piece of a still picture file is recorded, the shooting ends. Or, when the user issues an instruction for sequence shooting, the shooting is ended by a stop request from the user or after a predetermined number of pieces of still picture files are recorded.

The shooting stop request from the user is transmitted to the system controlling unit 104 via the user I/F unit 200. The system controlling unit 104 issues a stop request to the camera unit 211 and the still picture encoder 222.

Each media file recorded to the disc medium 100 through the procedure as described so far is managed in association with a specific group so that the search for the file would be easily performed in the future.

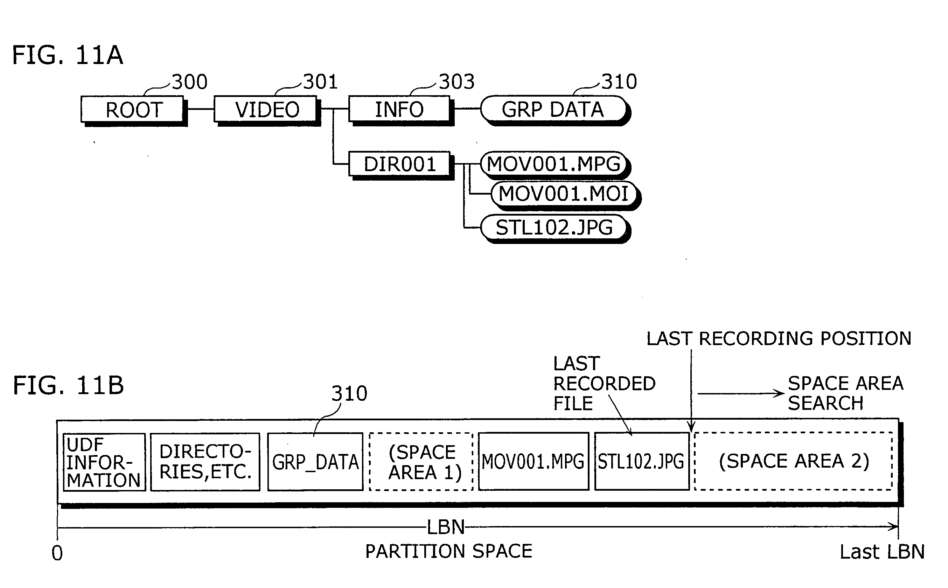

An explanation is given for an operation performed on the management information file 310 by the system controlling unit 104 when a media file is recorded to the disc medium 100, with reference to FIG. 11 to FIG. 14.

FIG. 11 shows a structure of directories and files on the disc medium 100 at a certain instant as well as showing a general outline of data allocation in a partition space corresponding to this state.

FIG. 11A shows the structure of the directories and files. Here, two media files are recorded.

FIG. 11B shows the general outline of the data allocation in the partition space corresponding to the state shown in FIG. 11A, and simply describes only data required to explain the embodiment of the present invention.

Here, the UDF information is information for a file system such as a space bitmap descriptor (Space Bitmap Descriptor) that manages a space area in the partition space. Directory, etc. includes a Root directory, a VIDEO directory, other directories, files, and information of the file system for managing these.

GRP_DATA represents the management information file 310 and includes information used for classifying a media file into a group.

Space areas 1 and 2 are areas in which no data has been recorded and new files can be recorded. Whether or not a certain logical block is a space area is determined by checking a value for each bit of the space bitmap descriptor.

Note that MOV001.MPG and STL102.JPG are media files and that all the media files under the DIR001 directory are managed in the same group.

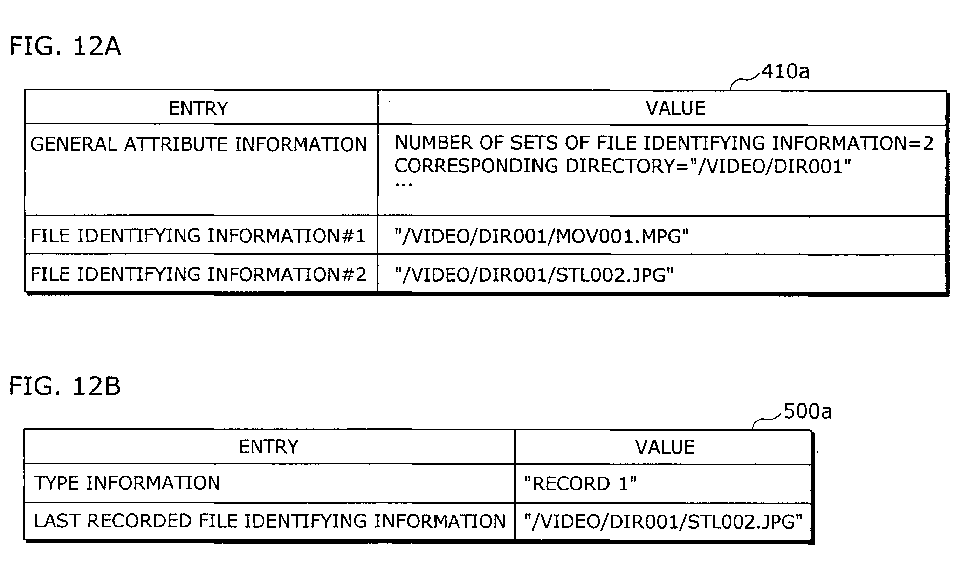

The state in the management information file 310 at this time is shown in FIG. 12. FIG. 12A shows values set in one set of the group management information.

As the general information, the number of sets of the file identifying information is set at 2, and "/VIDEO/DIR001/" is set as the information of the directory corresponding to the current group. To the two existing sets of the file identifying information, "/VIDEO/DIR001/MOV001.MOG" and "/VIDEO/DIR001/STL002. JPG" are respectively set.

Meanwhile, FIG. 12B shows values set to the recording resume information 500. As the type information, "record 1" indicating the recording resume information of the present embodiment is set. Also, as the last recorded file identifying information, "/VIDEO/DIR001/STL002.JPG" is set.

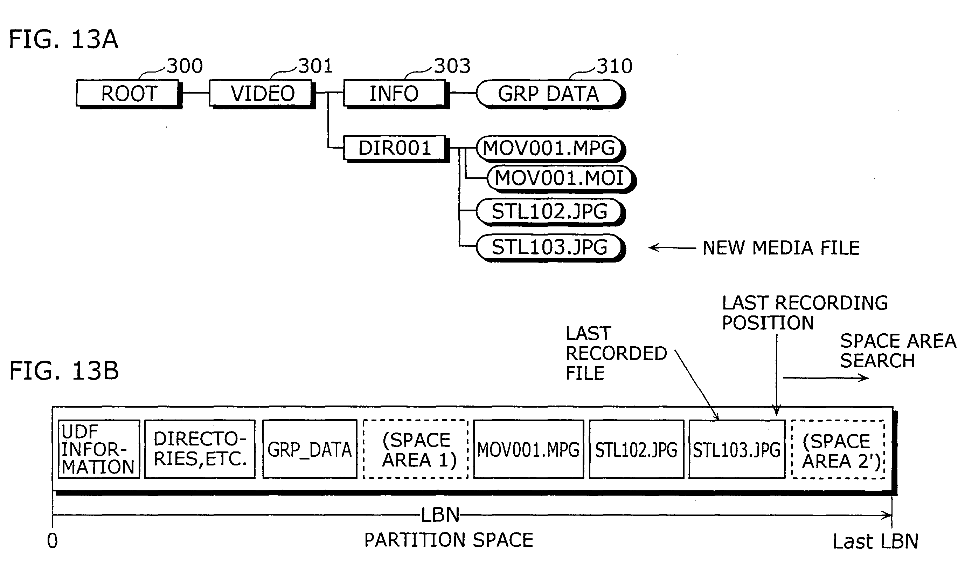

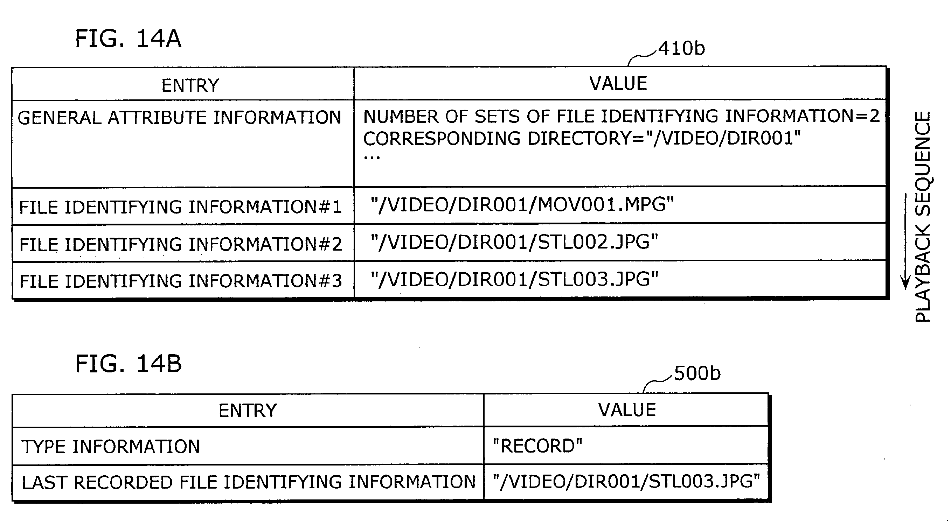

An explanation is given for an operation performed, with the state being as shown in FIG. 11 and FIG. 12, on the management information file 310 by the system controlling unit 104 when a new media file is to be recorded according to the stated procedure, with reference to FIG. 13 and FIG. 14.

FIG. 13 shows a structure of directories and files on the disc medium immediately after STL103.JPG was recorded as a new media file as well as showing a general outline of a data arrangement in the partition space corresponding to this state.

FIG. 13A shows the structure of directories and files. As compared with FIG. 11A, STL103.JPG is added.

FIG. 13B shows the general outline of the data allocation in the partition space corresponding to FIG. 13A. As compared with FIG. 11A, STL103.JPG is added.

The recording position of STL103.JPG is determined on the basis of the information stored in the last recorded file identifying information 501 in the recording resume information 500 immediately before STL103.JPG is recorded.

To be more specific, the last logic block number (LBN) of the media file indicated in the last recorded file identifying information 501 is obtained from the file system information and, from that position, the search for a space area is conducted. In FIG. 11B, it corresponds to the part indicated as the space area search. (However, the actual space area search is executed by checking each bit of the space bitmap descriptor that manages each LBN in the partition space.)

When the file system is UDF, the value of this last LBN can be obtained from a file entry (File Entry) that is a data structure of UDF.

The file entry manages the recording start position for each file and its data length. More specifically, the recording start position (Extent Position) for each file and its data length (Extent Length) are stored by an allocation descriptor (Allocation Descriptor) included in the file entry.

From this recording start position and the value of the data length, the last LBN of the media file indicated in the last recorded file identifying information 501 can be found.

By performing such a space area search, the space area 2 is determined as a first recordable space area.

Thus, the recording position of STIL103.JPG recorded as shown in FIG. 13 is a start part of the space area 2, and FIG. 13b shows the state where the recording is conducted at this position. As the result of recording STIL103.JPG, the space area 2 becomes a space area 2' and the area in which STIL103.JPG has been recorded is registered as a used area into the space bitmap.

It should be noted that when a search limit for a space area reaches the end of the partition space (Last LBN), the search returns to the start of the partition space this time and then the search is performed from that position in the direction of the last LBN.

Accordingly, for playing back a media file, a data allocation where the frequency of access operations required for data readout by the optical pickup 101 can be restricted to the minimum necessary is realized.

FIG. 14 shows a state in the management information file 310 after STIL103.JPG was recorded. FIG. 14A shows a state after the group management information shown in FIG. 12A was updated.

The number of sets of the file identifying information in the general information is changed to 3. The file identifying information #3 is added, and as its value, "/VIDEO/DIR001/STL003.JPG" is set.

Meanwhile, FIG. 14B shows values that are newly set to the recording resume information 500. As compared with FIG. 12B, the value of the last recorded file identifying information is changed to "/VIDEO/DIR001/STL003.JPG".

In this way, every time a new media file is recorded to the disc medium 100, the management information file 310 which is the management information is updated by the system controlling unit 104. To be more specific, the group management information corresponding to the group into which the media file is classified is updated, and the last recorded file identifying information of the last recorded file is recorded into the recording resume information 500.

When a new media file is recorded, its recording position is located in an area that follows the end of the most recently recorded media file. This means that the media files belonging to the same group are arranged in a continuous area on the disc medium 100.

The recording resume information 500 is recorded as a part of the management information file 310 to the disc medium 100. On account of this, if the power of the recording/playback apparatus is turned off or the disc medium 100 is taken out of the recording/playback apparatus, the same recording operation can be resumed by reading out the recording resume information 500 again from the disc medium 100.

It should be noted that the recording or playback of the management information file 310 into or from the disc medium 100 is performed as appropriate according to an instruction from the system controlling unit 104.

Next, an operation of playing back the above-stated disc medium 100 is explained, with reference to FIG. 4.

In addition to the user I/F unit 200, the system controlling unit 104, etc. as described above, a recording/playback system shown in FIG. 4 is further composed of: the drive apparatus 110 that reads out data from the disc medium 100; the track buffer 103 that temporarily stores the data read from the drive apparatus 110; the moving picture decoder 240 that plays back an AV stream such as a moving picture file (MOV001.MPG, for example); the still picture decoder 241 that decodes a still picture file (STL003.JPG, for example); and the displaying unit 250 that displays the result of decoding to the user.

It also has the digital I/F unit 230 that externally supplies AV streams. This allows the AV streams to be supplied externally via a means of communication, such as IEEE1394 or IEC958.

As shown in FIG. 2 and FIG. 4, the data recorded as a media file on the disc medium 100 is read out by the optical pickup 101 of the drive apparatus 110 and is stored into the track buffer 103 through the ECC processing unit 102.

The data stored in the track buffer 103 is inputted into either the moving picture decoder 240 or the still picture decoder 241, and it is then decoded and outputted.

At this time, the controlling unit 104 determines the data to be read out on the basis of the order in which the sets of the file identifying information are arranged in the group management information shown in FIG. 14A, for example.

To be more specific, as indicated by an arrow shown on the far-right portion of the figure in the case of an example shown in FIG. 14A, the system controlling unit 104 exercises control to play back firstly the media file "/VIDEO/DIR001/MOV001.MPG", next the media file "/VIDEO/DIR001/STL002.JPG", and finally the media file "/VIDEO/DIR001/STL003.JPG".

At this time, the system controlling unit 104 can distinguish among the types of the media files to be played back on the basis of the extension (such as MPG or JPG) of each media file and the information in the attribute information file (MOVnnn.MOI). Thus, the system controlling unit 104 exercises control so that the read media file would be inputted into an appropriate decoder.

In this way, when the media files classified into a certain group are to be played back in sequence, an access operation by the optical pickup 101 is caused in general during the readout of each media file. In a case where the media files are located wide apart on the disc medium, the access operation by the optical pickup or the like takes a long time. The speed of reading out the data cannot keep up with a request for continuous playback of a plurality of media files. As a result of this, the images to be played back and displayed may be stopped.

If the method of determining the recording position of the media file using the above-stated recording resume information is not employed, the file STL003.JPG may be arranged in the space area 1 of FIG. 13B.

If such an arrangement is performed and three media files under the directory DIR001 are to be continuously played back, the optical pickup 101 will have to conduct an access operation largely towards the inner track to reach the start of the file STL003.JPG after the playback of the file STIL002.JPG. During this time, the display may be stopped.

Meanwhile, in the present embodiment of the present invention, since the media files are recorded to the disc medium 100 according to the stated recording operation, the media files belonging to the same group are to be allocated in the continuous area on the disc medium 100.

For example, as shown in FIG. 13B, three media files under the directory DIR001 are sequentially allocated in the partition space in order of playback from the inner track to the outer track.

For playing back the media files allocated in this manner, the optical pickup 101 firstly accesses the start of the file MOV001.MPG and start playing it back. After this, the playback becomes possible only by continuously reading out the data. No large access operation is needed until reaching the end of the file STL003.JPG that is the last playback subject.

Accordingly, the continuous playback/display of a plurality of media files for the user is easily realized.

It should be noted that the above explanation has been given for an example case where the analog broadcasting is encoded into the MPEG-2 PS format for recording the media files. However, the media files may be recorded according to other encoding methods.

For example, in the case of encoding into the MPEG-2 TS format, the moving picture encoder 221 converts an analog signal into a digital signal and encodes it into an MPEG transport stream.

Moreover, even in the case of self-encoding an AV signal transmitted from the camera unit 211, a source of an input into the moving picture encoder 221 is only changed from the analog broadcasting tuner 210 to the camera unit 211 and the stated processing is basically the same.

Also, the recording by an outside encoding in which the digital broadcasting is recorded as media files is possible, in addition to the self-encoding. In this case, the type of moving picture data to be recorded is the MPEG-2 TS format.

At this time, a request from the user to record the digital broadcasting is transmitted to the system controlling unit 104 through the user I/F unit 200. The system controlling unit 104 requests the digital broadcasting tuner 212 for data reception and the analyzing unit 223 for data analysis. The MPEG transport stream sent from the digital broadcasting tuner 212 is transmitted to the track buffer 103 through the analyzing unit 223.

The analyzing unit 223 analyzes the system layer of the MPEG transport stream, detects information required for creating an access map, and then sends it to the system controlling unit 104.

Next, the system controlling unit 104 outputs a recording request to the drive apparatus 110. The drive apparatus 110 fetches data accumulated in the track buffer 103 and records it to the disc medium 100.

At this time, the system controlling unit 104 determines the last recording position of the last recorded file on the basis of the group management information, the resume information, and the allocation information of the file system. It then searches for a space area unidirectionally from the current last recording position, determines the start of the current space area as the recording start position, and issues an instruction to the drive apparatus 110. Here, the system controlling unit 104 searches the recordable area on the disc for the above-mentioned continuous area (CDA) as a space area. The drive apparatus 110 records the data into the retrieved continuous area.

The end of the recording is instructed through a stop request from the user. The recording stop request from the user is transmitted to the system controlling unit 104 via the user I/F unit 200. The system controlling unit 104 issues a stop request to the digital broadcasting tuner 212 and the analyzing unit 223.

Receiving the analysis stop request from the system controlling unit 104, the analyzing unit 223 stops the analysis processing.

After the end of the digital broadcasting reception processing, the system controlling unit 104 creates attribute information including an access map and map management information, on the basis of the information received from the analyzing unit 223.

Note that, in the case of the outside encoding, there is a possibility that a valid access map cannot be created. As a case where the valid access map cannot be created, cases, such as one where incompatible digital broadcasting is received, can be thought.

Finally, the system controlling unit 104 requests the drive apparatus 110 to end recording the data accumulated in the track buffer 103 and to record the attribute information. The drive apparatus 110 records the data remaining in the track buffer 103 and the attribute information as attribute information (the file MOV002.MOI, for example) to the disc medium 100. Moreover, the system controlling unit 104 updates the group management information and the resume information that are contents of the management information file 310, records them to the disc medium 100 via the drive apparatus 110, and ends the recording processing.

Accordingly, the explanation has been given for the operation performed in response to the recording start and end requests from the user. In the case of a timer recording used in a VTR, for example, the system controlling unit takes the place of the user simply to automatically issue the recording start and end requests. Thus, the operation does not essentially differ from the stated one.

Also, as to the still picture recording, the still picture files can be inputted from the digital I/F unit 219 for the recording.

A DCF object sent from the digital I/F unit 230 is transmitted to the track buffer 103.

Receiving an instruction from the system controlling unit 104, the drive apparatus 110 records the data accumulated in the track buffer 103 to the disc medium 100.

The recording is ended when one piece of a still picture file is recorded. When the user gives an instruction for continuous recording, the recording is ended by a stop request from the user or after a predetermined number of pieces of still picture files are recorded.

The recording stop request from the user is transmitted to the system controlling unit 104 via the user I/F unit 200. The system controlling unit 104 issues a stop request to the digital I/F unit 230.

In such various kinds of recording procedures, the same procedures are performed for classifying a media file into a group, for setting the recording resume information, and for determining a recording position on the disc medium 100 on the basis of that recording resume information, as explained with reference to FIG. 11 to FIG. 14.

As a result, the media files belonging to the same group are consecutively allocated, which allows the continuous playback of these files.

(Second Embodiment)

In the first embodiment, the identifying information of the last recorded file is stored as the recording resume information, as shown in FIG. 10. However, this embodiment describes a problem that is caused when a media file indicated by the last recorded file identifying information is deleted from the disc medium 100 for some reason (a file deletion by an instruction from the user, for example). In this case, the last recording position, namely, a position from which the search for a space area is started for a next recording, cannot be found.

To be more specific, in the first embodiment, the last recording position is obtained from the last recorded file and the information of the file entry of the UDF file system corresponding to that file. Thus, if the last recorded file is deleted from the file system, the corresponding file entry is also deleted. As a result, the last recording position cannot be found.

In the second embodiment, an explanation is given for the structure of the recording resume information by which the last recording position can be found even after the last recorded file was deleted.

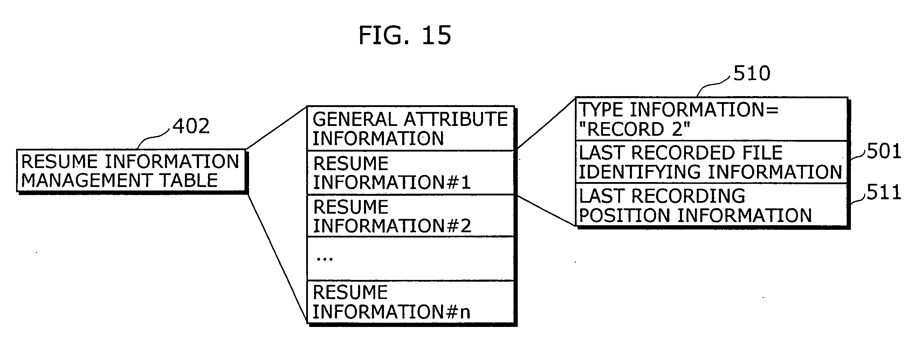

FIG. 15 shows recording resume information 510 in the embodiment of the present invention. In order to distinguish the recording resume information 510 of the present embodiment of the present invention from the recording resume information 500 shown in FIG. 10, a value "record 2" is set as the type information.

The recording resume information 510 is composed of last recording position information 511 in addition to the last recorded file identifying information 501. The last recording position information 511 is a part where position information of the end of the last recorded file, such as a value of LBN, is stored.

This is the same as the end position information which is obtained from the information of the file entry of the UDF associated with the identifier of the last recorded file when recording is performed in the first embodiment.

With this structure, even if the media file indicated by the last recorded file identifying information is deleted from the file system, the information as to the last recording position is held. Thus, using this information, a position from which a search for a space area to record a new media file is started can be determined.

Also, according to the structure of the second embodiment, the information as to the last recording position can be immediately obtained without checking the UDF information when the recording is performed. Therefore, there is also an effect that the recording operation can be started more quickly.

(Third Embodiment)

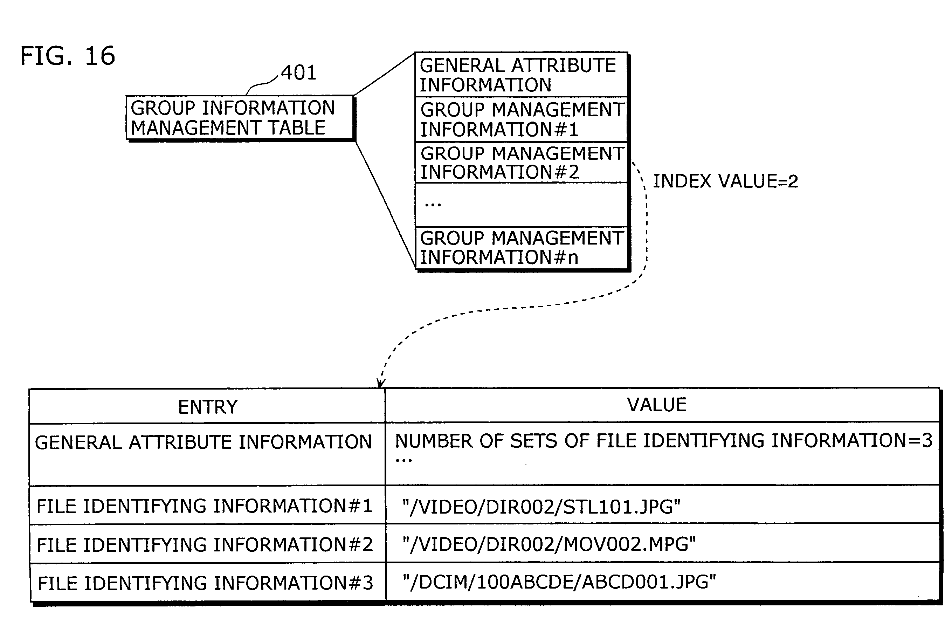

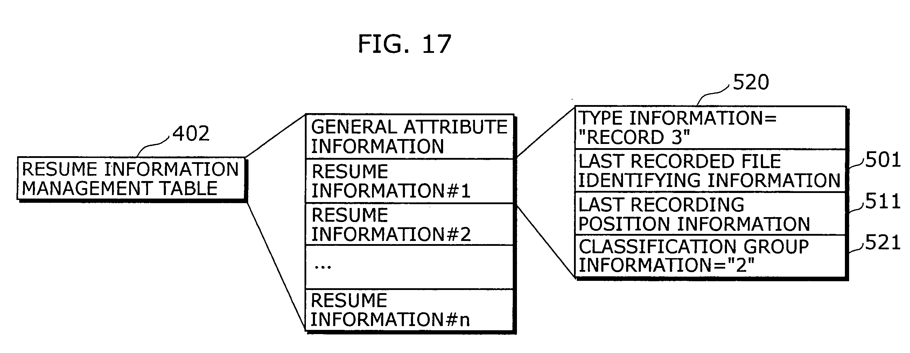

In the present embodiment, an explanation is given for a method of classifying files that is different from the one described in the first embodiment, with reference to FIG. 16 and FIG. 17.

FIG. 16 shows a structure of group management information and examples of its set values in the present embodiment. Note that the group management information shown in FIG. 16 manages group information for media files recorded to the disc medium 100 that has the structure of directories and files shown in FIG. 7.

The present group management information is different from the ones shown in FIG. 12, etc. in that media files making up a group managed by the present group management information are not recorded under the same parent directory.

To be more specific, as shown by the value of each set of the file identifying information, the media files belonging to the group managed by the present group management information are media files under the directory "/VIDEO/DIR002" and a media file under the directory "/DCIM/100ABCDE".

By using the group management information in this way, it becomes possible to group absolutely independently of the file classification using the directory structure of the file system. This enables a free classification to more reflect an intention of the user.

For a case where the media files belonging to the same group are consecutively arranged on the disc medium 100 like the first embodiment, it is preferable for the recording resume information to have the structure shown in FIG. 17 for such a group management.

FIG. 17 shows a structure of recording resume information 520 in the present embodiment. The recording resume information 520 is characterized by having classification group information 521 in addition to the structure of the recording resume information 510 shown in FIG. 15.

The classification group information 521 indicates a group to which the last recorded file shown in the last recorded file identifying information 501 belongs. As the form of information to be stored in the classification group information 521, an index value of the corresponding group management information is stored. In the case of FIG. 16, the index value is 2. Therefore, 2 is set as the value of the classification group information 521 in FIG. 17.

As the form of a value to be set to the classification group information 521, name information of a group stored in general information of the group management information may be used. Or, other forms may be used as long as the corresponding group can be specified.

By having the classification group information 521 in the recording resume information 520, it is possible to immediately find out the group to which the most recently recorded media file was classified, when a new media file is to be recorded. Also, it easily becomes possible to conduct the present recording, following the previous recording.

Without the classification group information 521, it will be necessary to take trouble including searching all the sets of the group management information for the newest media file and starting to record after that. As the number of the files and groups grow, so does the search time. This situation is not preferable with regard to use.

In the present embodiment, on the other hand, even if many files and directories exist on the disc medium 100, it becomes possible to quickly determine the group to which the file was classified.

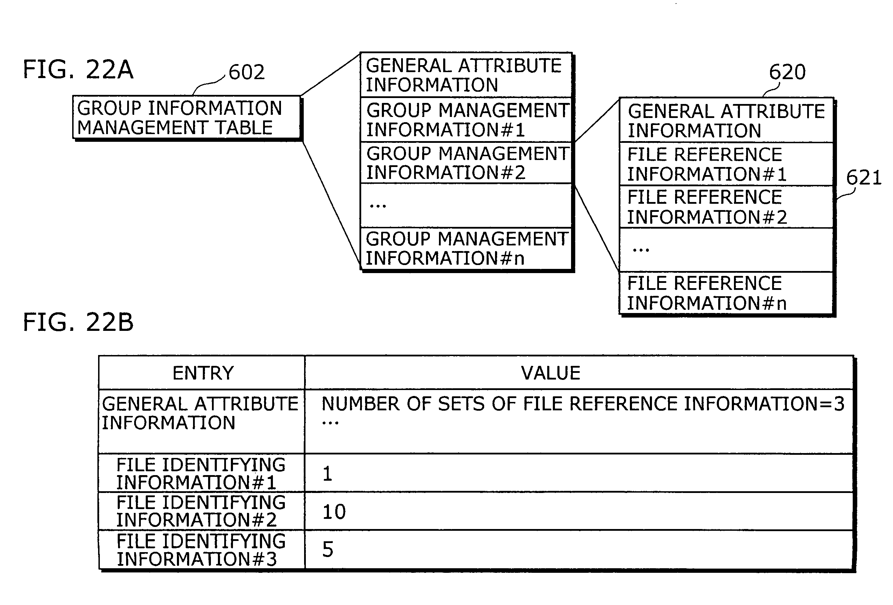

It should be noted that the data structure of the group management information may be different from the one shown in FIG. 16 as long as: it is possible to classify a plurality of media files; and identifying information (the index value in the case of FIG. 16) by which a corresponding group can be specified is provided. For example, a structure shown in FIG. 22A that will be described later may be employed.

(Fourth Embodiment)

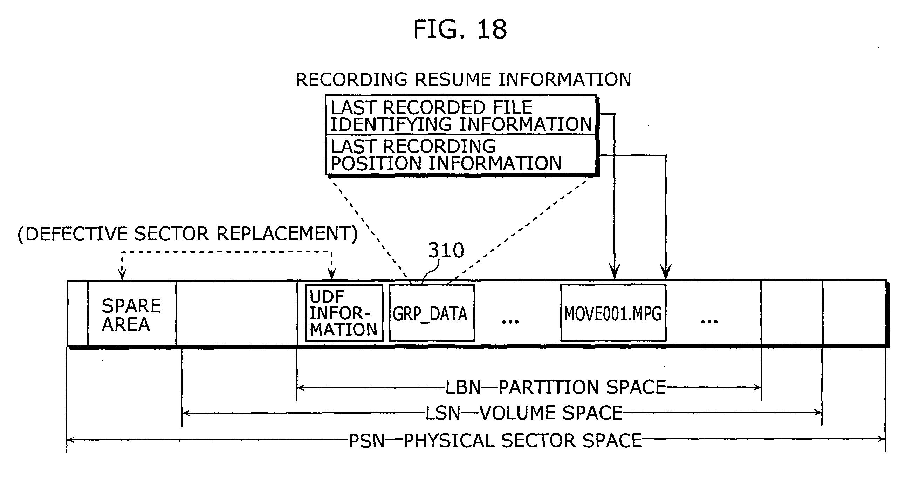

In the present embodiment, an explanation is given for a defect management operation for the recording resume information and the media files, with reference to FIG. 18.

FIG. 18 shows a rough arrangement on the disc medium 100 including: a spare area which is an area into which sectors replacing defective sectors are to be arranged; UDF information which includes file system information such as a space bitmap descriptor; a management information file 310 which includes recording resume information; and MOV001.MPG which is one of the media files.

The spare area is arranged inside a physical sector space to which a PSN has been assigned. When a defect is caused to a sector in the volume space to which an LSN has been assigned, a sector replacing this defective sector is replaced with one of the sectors in the spare area.

As explained with reference to FIG. 5B, the information showing the association between the defective sector and the spare sector is recorded into the defect management area (DMA: Defect Management Area).

In FIG. 18, since the spare area is located outside the volume area, it becomes possible to perform replacement processing for each sector in the volume space (and the partition space) to assign a spare sector.

Thus, the management information file 310 including the recording resume information is also subject to the replacement processing. If a sector into which the recording resume information has been recorded becomes a defective sector for some reason (for example, the disc medium is at the end of its cyclability life), it is possible to hold the recording resume information with a constantly high degree of reliability without losing data by replacing the defective sector with a spare sector.

Meanwhile, as to a media file which includes moving picture data (MOV001.MPG, for example), data is recorded without the replacement processing (for example, data is arranged, with defective sectors being skipped). To be more specific, as explained with reference to FIG. 3, it is possible to play back AV data without interruption by arranging the AV data into a continuous area called CDA in order to conduct the continuous playback of the AV data.

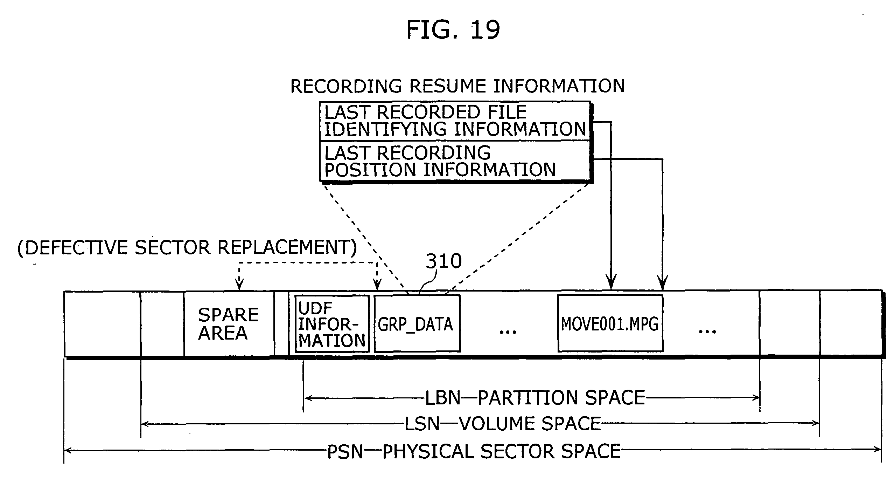

In a case where a spare area is not arranged in the physical sector space as shown in FIG. 19, it becomes possible to record the recording resume information with a high degree of reliability in the same manner as explained above with reference to FIG. 18, through the replacement processing by the file system.

The replacement processing by the file system is realized by a Spare Table which corresponds to a DMA and a Spare Area which is a spare area in the case of UDF, for example.

As is the case with FIG. 18, a high degree of reliability is ensured in the case of FIG. 19 through the replacement processing performed as needed for the UDF information, the management information file, and the recording resume information included therein. Meanwhile, the continuous playback of the media file including AV data (MOV001.MPG, for example) is realized by allocating the data without performing the replacement processing.

(Fifth Embodiment)

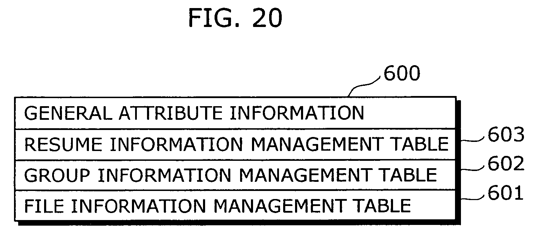

In the present embodiment, an explanation is given for the form of a management information file, with reference to FIG. 20 to FIG. 23.

FIG. 20 shows a structure of a management information file 600 in the present embodiment. It is recorded to the disc medium 100 by the same directory hierarchy and file names as the management information file 310 of FIG. 8.

The management information file 600 shown in FIG. 20 is composed of general attribute information, a file information management table 601, a group information management table 602, and a resume information management table 603.

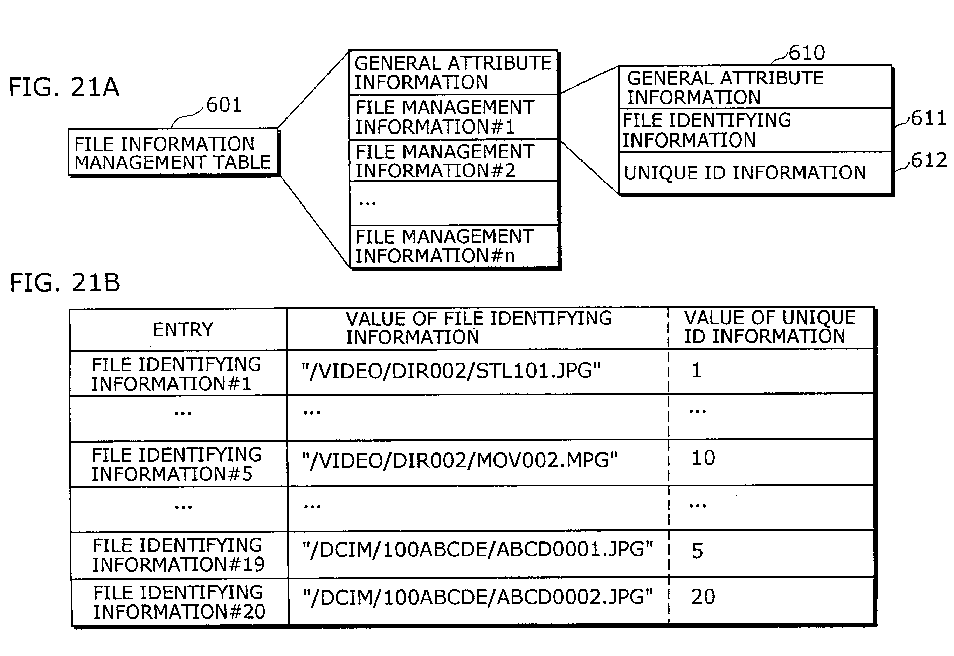

As shown in FIG. 21A, the file information management table 601 is composed of: file management information 610 for managing individual files; and general attribute information for managing the number of sets of the file management information, etc.

Moreover, the file management information 610 is composed of: general attribute information; file identifying information 611 which is path information of a media file corresponding to the current file management information; and unique ID information 612 to which a value that is unique at least in one management information file 600 is set.

The general attribute information includes general information corresponding to the current file management information, and may also include a comment (text information), creation date and time, a length of playback time, etc.

The file identifying information 611 stores path information of the media file included in the current group. The form of the path information is the same as the file identifying information 411 of the first embodiment, for example.

A unique ID value (32-bit integer value information, for example) that is unique at least in the management information file 600 is set to the unique ID information 612. This ID value is set for the purposes, such as referring to the appropriate file management information 610 from the file reference information 621 described later.

FIG. 21B shows examples of values to be set in the file management information table. It should be noted that 20 sets of file management information exist here. To be more specific, the management information file 600 manages 20 media files, and the general attribute information which is not shown here stores information indicating that the number of sets of the file management information is "20".

Each of 20 sets of the file management information has file identifying information and unique ID information. (Note that the sets of the file identifying information stored in between are omitted in the figure.) Examples of the values of the file identifying information and the unique ID information are shown in FIG. 21B.

Next, as shown in FIG. 22, the group information management table 602 is composed of: group management information 620 which manages files belonging to individual groups; and general attribute information which manages the number of sets of the group management information 620, etc.

Moreover, each set of the group management information 620 is composed of: file reference information 621 which has reference information used for referring to the media file belonging to the current group; and general attribute information which manages the number of sets of the information.

The general attribute information includes the number of sets of the file identifying information included in the current group management information, and may also include a name of the current group, a comment, creation data and time, etc.

Also, the current group may be associated on one-to-one with a directory managed by the file system on the disc medium. In this case, information regarding the name of the corresponding directory may be included.

Meanwhile, each set of the file reference information 621 has reference information used for referring to a media file included in the current group, that is, the value of the unique ID information which is held by the file management information 610 managing the current media file.

FIG. 22B shows examples of set values of group management information 620 in the present embodiment. Note that the group management information 620 shown in FIG. 22B is recorded into the management information file 600 together with the file information management table 601 shown in FIG. 21B.

The group management information 620 shown in FIG. 22B has 3 sets of the file reference information 621. These sets of the file reference information 621 respectively have the values "1", "10", and "5" as the reference values used for referring to the unique IDs.

In FIG. 21B, meanwhile, by finding the sets of the file identifying information 611 which respectively have the unique ID values "1", "10", and "5", the sets of the file identifying information of the corresponding media files can be obtained and the path information for the media files on the file system can be also obtained.

In this way, by the group management information 620 which uses the unique ID value assigned to each media file, it becomes possible to group the media files absolutely independently of the file classification using the directory structure of the file system. This enables a more free classification which reflects an intention of the user.

For a case where the same media files are to be classified into a plurality of different groups, the reference is performed using a 32-bit unique ID, for example, without directly storing the pathname of the file. Owing to this, the grouping can be realized with the less volume of data.

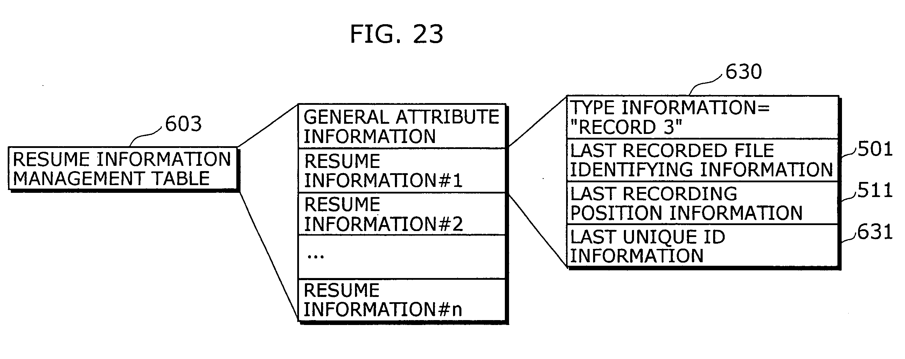

For such a file management using the unique ID, it is preferable for the recording resume information to have the structure shown in FIG. 23.

To be more specific, as compared with the other embodiments described above, the structure of the resume information management table 603 shown in FIG. 23 of the present embodiment is characterized by having last unique ID information 631.

The same value as the unique ID information held by the file management information 610 that manages the last recorded file indicated by the last recorded file identifying information 501 is set to the last unique ID information 631. For example, in a case where the last recorded file is a media file which is managed by the file identifying information #20 of FIG. 21B, the value "20" is set to the last unique ID information 631 as shown by the unique ID value in FIG. 21B.

By having the last unique ID information 631 in the resume information management table 603, it is possible to immediately find out the unique ID value which is set to the most recently recorded media file, when a new media file is to be recorded.

At this time, a method of assigning a unique ID to a media file is decided beforehand so that, for example, a 32-bit integer may be assigned in increasing order starting from a small value (the initial value may be set at "0", for example). With this, it is possible to immediately determine a unique ID value of the media file to be newly recorded.

More specifically, when the value "20" is set to the last unique ID information 631, the unique ID "21" which is increased by one to "20" will be assigned to a media file to be next recorded.

Without the last unique ID information 631, it will be necessary to search all the sets of the file management information 610 to avoid duplicating the unique ID that has already assigned. As the number of the files grows, so does the search time. This situation is not preferable with regard to use.

In the present embodiment, on the other hand, even if many files exist on the disc medium 100, it is possible to quickly determine a unique ID value.

It should be noted that, in the present embodiment, it is possible not only to determine a unique ID value, but also to determine a recording position of a media file using the recording resume information as well as determining a group to which the file is classified, as in the cases of the other embodiments.

Note that the file names, the directory names, the structure of the directory, etc. used in the above embodiments may be other names and structure.

In the stated embodiments, one file GRP_DATA stores the group information and the resume information. However, the same effect can be obtained if they are stored respectively into different files.

(Sixth Embodiment)

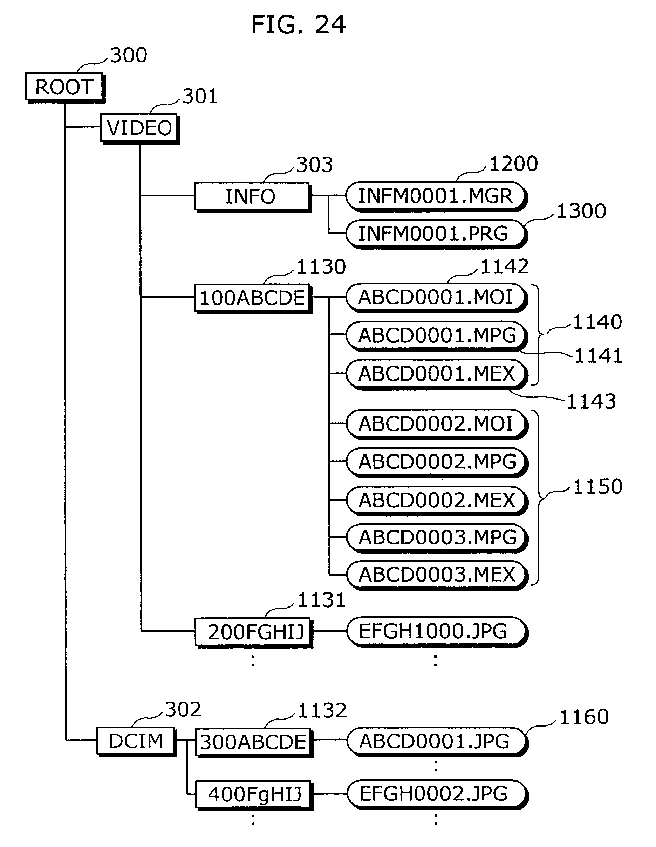

FIG. 24 shows an example of a hierarchical structure of directories and files on the disc medium 100 to which a recording operation is performed by the recording/playback apparatus of the sixth embodiment of the present invention.

As shown in FIG. 24, under a ROOT directory 300, sub-directories (301 to 303, and 1130 to 1132) which are hierarchically organized are stored. Under this hierarchy, there are: various kinds of media objects (1141 to 1160, etc.) which are files for including moving picture data and still picture data; a media object manager 1200 (the file name: INFM0001.MGR) which is a file for managing each media object; and a program manager 1300 (the file name: INFM0001.PRG) which classifies a plurality of media objects into groups and manages the playback sequence and the classification information.

Hereafter, an explanation will be given in the present sixth embodiment for the directory hierarchy and file names of the various kinds of media objects which include the AV data to be recorded or played back, using the DCF standard and the like described later. Note that, however, a rule for naming the directory hierarchy and file names is not limited to this, and other naming rules may be used.

Of the media objects, a moving picture object including MPEG2 moving picture data or the like is recorded according to the naming method with which the first four letters are described as a combination of arbitrary alphabets and the next nnnn is a decimal number as in the moving picture file ABCDnnnn.MPG. The moving picture file includes AV data compressed according to the MPEG2 method, the MPEG4 method, or the like, and it is recorded as a program stream (PS), a transport stream (TS), or a file in another format.

The attribute information of each moving picture file is recorded into the attribute information file ABCDnnnn. MOI. The attribute information file has: identifying information of the current moving picture file; recording date and time; representative moving pictures of the moving picture data; and access map information and its management information for converting the playback time of day of moving picture data into an address on the disc medium 100. By having the access map information, it becomes possible to perform conversion between a time axis of the moving picture data and a data (bit stream) axis. Thus, it becomes possible to perform random access with reference to the time axis relative to the moving picture data.

Moreover, additional information related to each moving picture file is recorded into an additional information file ABCDnnnn.MEX. The additional information file has: audio data to be played back together with the current moving picture file; still pictures or graphic data; and text data or area reservation data for post-recording such information.

The moving picture file and the additional information file are arranged on the disc medium 100 in an interleaved manner in a predetermined cycle.

The above-mentioned attribute information file also stores information regarding this interleave cycle. For example, the interleave cycle may be defined according to respective data sizes of the moving picture data and the additional information corresponding to the playback time length ranging from a few seconds to a few tens of seconds.

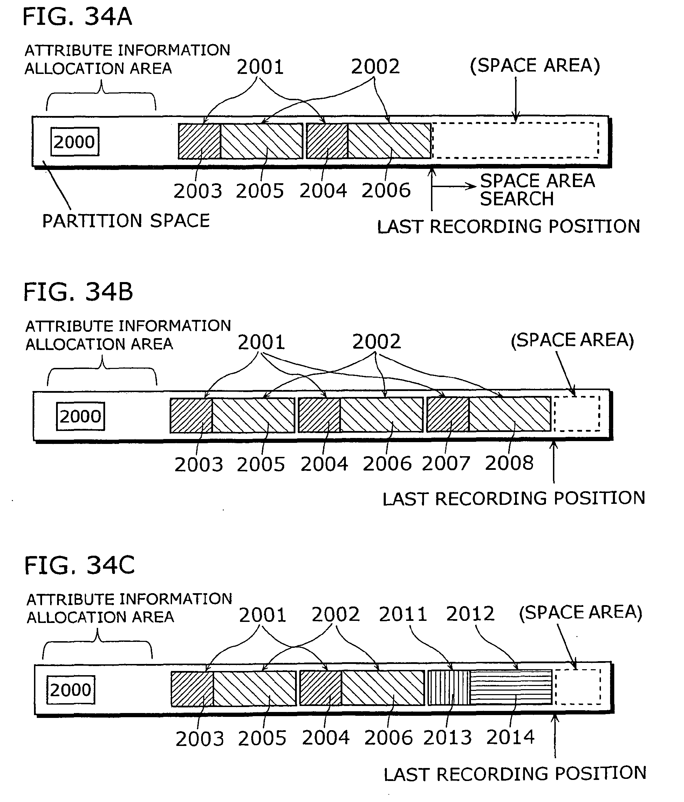

The allocation of the moving picture file and the additional information file will be explained later, with reference to FIG. 34.

A moving picture object is composed of: one attribute information file; and one or more moving picture files and additional information files. These are associated with each other by their file names.

To be more specific, the related attribute information file and moving picture file are associated with each other by setting the same at the parts of their file names apart from the extensions. For example, as to the moving picture object 1140, the part "ABCD0001" is set the same for the moving picture file 1141, the attribute information file 1142, and the additional information file 1143 so that the association among them is established.

However, the way to establish the association between the attribute information file and the moving picture file is not limited to the stated method, and other methods may be used. Link information used for referring to the related moving picture file and additional information file, such as a pathname or the like used for referring to the moving picture file, may be stored in the attribute information file. Or, the association between the two may be stored as table information in the attribute information file. Alternatively, information regarding the association may be held by, for example, the media object manager 1200 described later.

For example, the moving picture object 1150 is composed of: one attribute information file (ABCD0002.MOI); a plurality of moving picture files (ABCD0002.MPG, ABCD0003.MPG); and a plurality of additional information files (ABCD0002.MEX, ABCD0003.MEX). Here, note that a pathname used for referring to the related files is stored in the attribute information file.

Of the media objects, a still picture object including JPEG still picture data or the like is recorded, with each set of still picture information being recorded as a still picture file ABCDnnnn.JPG or the like. The still picture file is image data compressed according to the JPEG method or the like, and recorded as a file in the DCF format or the Exif format.

The stated media object is recorded according to the DCF standard or a similar directory structure. More specifically, the DCF image root directory 302 (a directory name: DCIM) is stored under the root directory 300, and further under this, the DCF directory 1132 (a directory name: 300ABCDE, for example) for storing the still picture file is stored. Under the DCF directory 1132, a DCF basic file 1160 (a file name: ABCD0001.JPG, for example) which is a kind of still picture objects is stored.

Under the ROOT directory 300, a VIDEO image root directory 301 (a directory name: VIDEO) is stored, and further under this, a VIDEO directory 1130 (a directory name: 100ABCDE, for example) for mainly storing the moving picture objects is stored. Under the VIDEO directory 1130, the attribute information file 1142 (a file whose extension is MOI), the moving picture file 1141 (a file whose extension is MPG), and the additional information file 1143 (a file whose extension is MEX) which all make up the moving picture object 1140 are stored.

It should be noted that an AV file in another file format, such as an audio file, a motion JPEG file, a DCF extended image file defined by the DCF standard, or a DCF thumbnail file, may be recorded as a media object.

Contents management information which manages the recorded media object is recorded as the media object manager file 1200 (a file name: INFM0001.MGR) and the program manager file 1300 (a file name: INFM0001.PRG) under the management data directory 303 (a directory name: INFO).

The structures of the media object manager file 1200 and the program manager file 1300 will be described later.

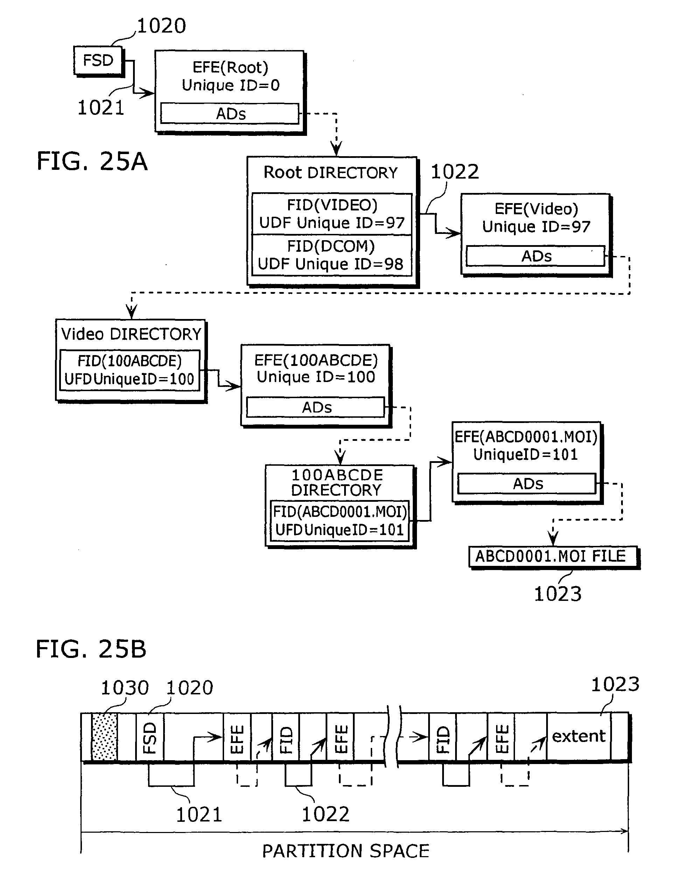

Next, with reference to FIG. 25, FIG. 26, and FIG. 27, an explanation is given for a structure of the UDF file system which manages data as files on the disc medium used by the recording/playback apparatus of the sixth embodiment.

FIG. 25 shows a data structure for managing the directory hierarchy of the UDF file system. It should be noted that the present figure corresponds to the structure of the directory hierarchy shown in FIG. 24, and shows only the file system information from the ROOT directory 300 to the attribute information file 1142. An explanation for the same information corresponding to the other directories and files is omitted in the interest of simplicity.

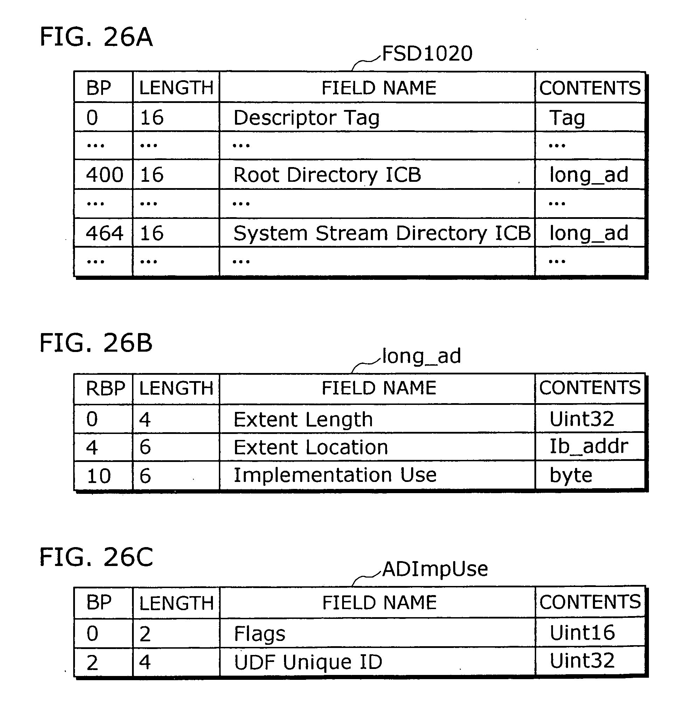

The origin of the directory hierarchy structure is a file set descriptor FSD (File Set Descriptor) 1020. The FSD 1020 has a data structure shown in FIG. 26A.

The FSD 1020 holds reference information 1021 (a recording position on the disc medium 100) used for referring to an extended file entry EFE (Extended File Entry) as a value of a Root Directory ICB (Information Control Block).

Moreover, the FSD 1020 is able to reference to data called a Named Stream from a System Stream Directory ICB.

The Root Directory ICB and the System Stream Directory ICB 502 have a structure indicated as long_ad shown in FIG. 26B.

The long_ad stores an extent length (Extent Length) and an extent location (Extent Location) of a referential destination.

Moreover, a value called a UDF Unique ID is stored in an Implementation Use in the ADImpUse form shown in FIG. 26C.

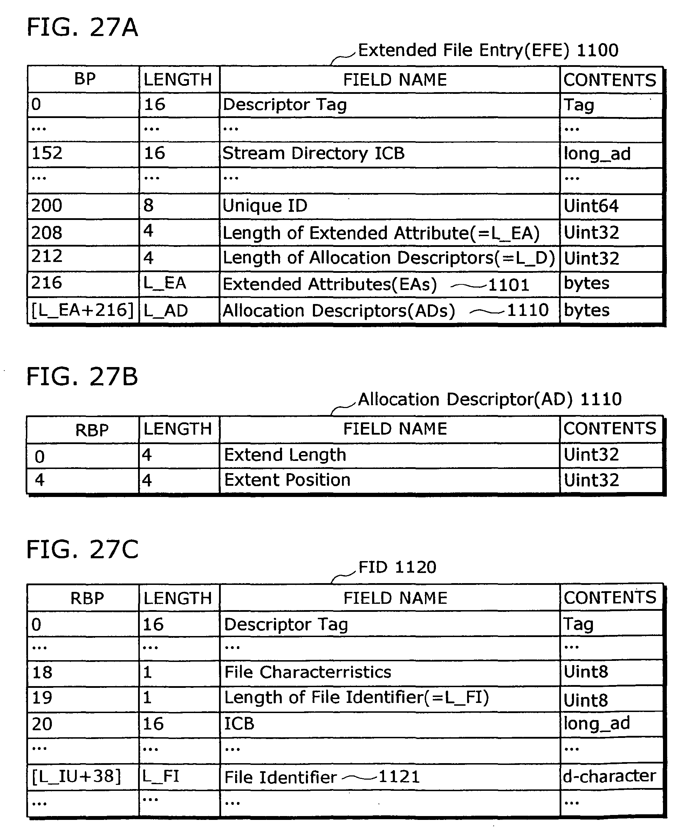

The EFE has a structure shown in FIG. 27A. An EFE 1100 is a structure for managing a set of extents making up a directory or a file recorded to the disc medium 100. It also includes a structure called an allocation descriptor AD 1110 for managing a recording position and a data length on the disc medium 100 for each extent. Since each directory or file is composed of a plurality of extents, the EFE 1100 includes a plurality of ADs 1100. It should be noted that the allocation descriptor AD 1110 has a structure shown in FIG. 27B.

In addition, the EFE 1100 includes: a descriptor tag (Descriptor Tag) for indicating a type of data; a Unique ID for setting a unique ID value that is unique on the disc medium 100 for each directory and file; a Stream Directory ICB enabling an extended attribute to be set for each EFE 1100; and extended attributes EAs (Extended Attributes) 1101.

An extent including directory data, such as the Root directory 300, is composed of a file identifier descriptor FID (File Identifier Descriptor) 1120 that holds a file name of a directory or a file. When sub-directories or files exist under a directory, the FID 1120 is stored for each directory or file.

According to FIG. 24, for example, the VIDEO image root directory 301 and the DCIM image root directory 302 exist under the ROOT directory 300. Therefore, a corresponding FID for each is stored in the actual data of the ROOT directory 300.

The FID 1120 has a structure shown in FIG. 27C. The FID 1120 holds a name (a file identifier) of each directory or file managed on the UDF as a file identifier (File Identifier) 521. The FID 1120 further holds reference information (1022, for example), as an ICB, that is used for referring to the EFE 1100 that manages the actual data of the corresponding directory or file

In addition, the FID includes: a descriptor tag (Descriptor Tag) for indicating a type of data; and a length of file identifier (Length of File Identifier) for indicating a data length of the file identifier (File Identifier) 1121.

From then on, the hierarchical structure of the directory is similarly managed by storing the reference relation between the EFE 1100 and the FID 1120. By sequentially tracing this reference relation, it becomes possible to access the extent which is the actual data of an arbitrary directory or file.

As to a file, a set of extents is also managed by the EFE 1100. In the case of FIG. 25, a set of extents 1023 makes up a file. This corresponds to the attribute information file 1142 in FIG. 24.

For the file system having the hierarchical structure as described so far, a pathname can be used in order to reference to a specific directory or file. For example, a pathname for the file 1142 in FIG. 24 is described as "/VIDEO/ 100ABCDE/ABCD0001. MOI". Here, the ROOT directory 300 and a path delimiter character are indicated as "/".

Accordingly, a pathname is a sequence in which the directory names, or equivalently, the information stored in the file identifier (File Identifier) 1121, existing on the pathway tracing the directory hierarchy to reach the target directory or file from the ROOT directory 300 are described, with the names being delimited with the path delimiter characters. By using this pathname, it becomes possible to reference to an arbitrary directory or file managed on the file system.

FIG. 25B shows an example of an allocation of the data structure of FIG. 25A in the partition space. Here, the same numerals are assigned to the same data in FIG. 25A and FIG. 25B.

Usually, it is necessary to access the EFE and the FID in sequence from the FSD 1020 in order to access the extent 1023.

As shown in FIG. 25B, since each set of data making up the directory structure is arranged in a separate location in the partition space in general, an access time to a certain amount is required in order to access the extent 1023.

Moreover, a space bitmap descriptor (Space Bitmap Descriptor) 1030 is arranged in the partition space shown in FIG. 25B. The space bitmap descriptor 1030 is bitmap data showing whether data has been assigned to each logical block (LB) in the partition space.

Next, an explanation is given for an operation performed by the recording/playback apparatus of the sixth embodiment, with reference to FIG. 4. The recording/playback apparatus shown in FIG. 4 starts its operation when the user I/F unit 200 receives a request from the user, for example.

The user I/F unit 200 transmits the request from the user to the system controlling unit 104. The system controlling unit 104 analyzes the request from the user as well as issuing a processing request to each module.

The following is an explanation for an operation, as an example, in which the analog broadcasting is encoded into the MPEG-2 PS and recorded as a moving picture object, that is, a recording operation by a so-called self-encoding.

The system controlling unit 104 requests the analog broadcasting tuner 210 for reception and the moving picture encoder 221 for encoding. The moving picture encoder 221 performs video-encoding, audio-encoding, and system-encoding on the AV signal transmitted from the analog broadcasting tuner 210 before transmitting it to the track buffer 103. After starting the encoding, the moving picture encoder 221 sends information necessary to create access map information or the like to the system controlling unit 104, in parallel with the encode processing.

Next, the system controlling unit 104: determines the last recording position of the last recorded file on the basis of the group management information, the resume information, and the allocation information of the file system; searches for a space area unidirectionally from the present last recording position; decides the start of the present space area as the recording start position; and requests the drive apparatus 110 for recording. The drive apparatus 110 fetches the data accumulated in the track buffer 103 and records it to the disc medium 100. Here, the system controlling unit 104 searches the recordable area on the disc for a continuous area (CDA) mentioned above as the space area, and records the data into the retrieved continuous area.

Here, the search for the recordable area as the CDA is executed on the basis of space area information managed by the file system such as the UDF, i.e., on the basis of the space bitmap descriptor 1030, for example.

Note that the moving picture file and the additional information file are arranged on the disc medium 100 in an interleaved manner in the sixth embodiment.

Conditions for this interleave cycle are determined by the system controlling unit 104 in accordance with data rate of the moving picture file and the volume of data included in the additional information file. Then, the data is arranged into the space area that satisfies the conditions.

The end of the recording is instructed through a stop request from the user. The recording stop request from the user is transmitted to the system controlling unit 104 via the user I/F unit 200. The system controlling unit 104 issues a stop request to the analog broadcasting tuner 210 and the moving picture encoder 221. Receiving the encode stop request from the system controlling unit 104, the moving picture encoder 221 stops the encode processing.

After the end of the encode processing, the system controlling unit 104 creates the attribute information including access map information, its management information, and interleave management information of the moving picture file and the additional information file, on the basis of the information received from the moving picture encoder 221.

Next, the system controlling unit 104 requests the drive apparatus 110 to stop recording the data accumulated in the track buffer 103 and to record the attribute information. The drive apparatus 110 records the data remaining in the track buffer 103 and the attribute information as an attribute information file, such as the file ABCD0001.MOI making up the moving picture object shown in FIG. 24, to the disc medium 100. Moreover, the system controlling unit 104 updates the group management information and the resume information which are the contents of the management information file 310, records them to the disc medium 100 via the drive apparatus 100, and then ends the recording processing for the moving picture object.

In addition to the description above, the system controlling unit 104 creates and updates the information of the UDF file system as necessary, as explained with reference to FIG. 25, FIG. 26, and FIG. 27.

To be more specific, it creates the EFE 1100, the FID 1120, etc. for the file making up the moving picture object, and records them to the disc medium 100 after setting necessary information.

In a case where the recording/playback apparatus is a camera apparatus, a source of the AV signal is only changed from the analog broadcasting tuner 210 to the camera unit 211 and the rest of the processing is the same.

For an operation where the digital broadcasting is recorded as a moving picture object, the encoding is not performed on the moving picture data. Instead, the system controlling unit 104 controls so that the MPEG2 TS data is recorded as a moving picture object to the disc medium 100 through the digital broadcasting tuner 212 and the analyzing unit 223. At this time, as is the case with the recording by the self-encoding, the file system information is also recorded.

Next, an explanation is given for an operation related to the recording of a still picture object, where the AV signal transmitted from the camera unit 211 is recorded after the JPEG encoding.

The system controlling unit 104 requests the camera unit 211 to output the AV signal and the still picture encoder 222 to encode the AV signal. The still picture encoder 222 performs the JPEG encoding on the AV signal transmitted from the camera unit 211 and then sends it to the track buffer 103.

Receiving an instruction from the system controlling unit 104, the drive apparatus 110 records the data accumulated in the track buffer 103 to the disc medium 100. At this time, the search for a data recordable area is executed, on the basis of the space area information managed by the file system such as the UDF.

When one piece of a still picture object is recorded, the shooting ends. Or, when the user gives an instruction for sequence shooting, the shooting is ended by a stop request from the user or after a predetermined number of pieces of still picture objects are recorded.

The shooting stop request from the user is transmitted to the system controlling unit 104 via the user I/F unit 200. The system controlling unit 104 issues a stop request to the camera unit 211 and the still picture encoder 222.

Moreover, the system controlling unit 104 performs necessary processing for the information of the UDF file system. More specifically, it creates the EFE 1100, the FID 1120, etc. for the file making up the moving picture object, and records them to the disc medium 100 after setting necessary information.

Following the procedure stated so far, each media object recorded to the disc medium 100 is registered into the media object manager 1200 and the program manager file 1300 shown in FIG. 24, so that the organized classification of these media files and the program playback are realized later on.

An explanation will be given later for an operation performed on the media object manager 1200 and the program manager file 1300 by the system controlling unit 104 when a media object is to be recorded to the disc medium 100.

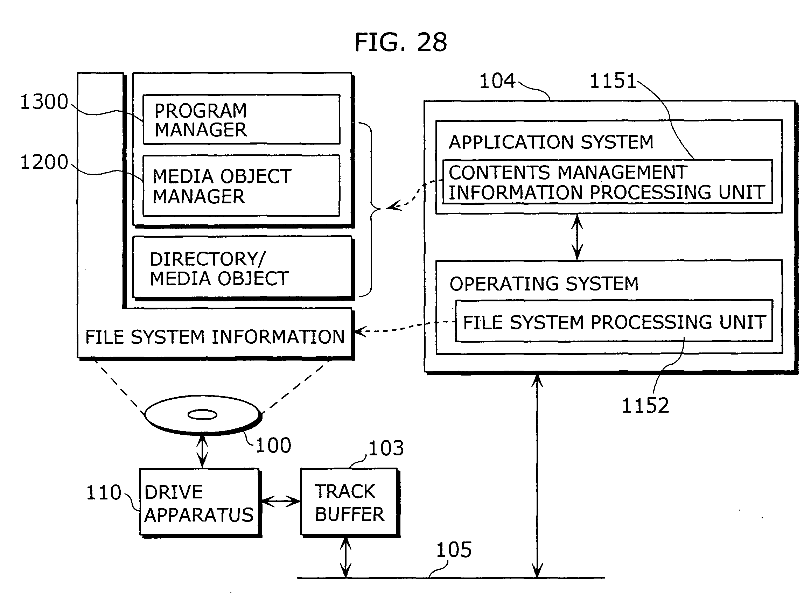

FIG. 28 shows a hierarchical structure of data to be recorded to the disc medium 100 used by the recording/playback apparatus of the sixth embodiment as well as showing the system controlling unit 104 that processes these and an example of its internal structure.

The file system information is recorded to the disc medium 100. The file system information includes the volume structure information shown in FIG. 6C as well as the FSD 1020, the EFE 1100, the FID 1120, and the space bitmap descriptor 1030 shown in FIG. 25, FIG. 26, and FIG. 27.

Moreover, the media object manager 1200 and the program manager 1300 are similarly managed as the files that are used in order to classify and organize these media objects according to their contents and recording date/time and in order to perform the program playback where the user sets a free playback sequence. They make up the contents management information.

These sets of data recorded to the disc medium 100 are operated by the system controlling unit 104 through the system bus 105.

Meanwhile, in more detail, the system controlling unit 104 is composed of an operating system (OS) and an application system.

The operating system includes: a file system processing unit 1152 for controlling the file system information; a device driver unit for controlling hardware which is not specifically shown; and a memory controlling unit. It provides various common functions for the application system through an API (Application Program Interface). On account of this, the application system can be realized, being isolated from the details of the hardware and the file system.

Meanwhile, the application system performs a control operation for a specific application. In the sixth embodiment, control related to the recording or playback processing of a moving picture object and a still picture object is performed as explained with reference to FIG. 4 for example.

Moreover, in the sixth embodiment, a contents management information processing unit 1151 in the application system performs an operation for the contents management information composed of the media object manager 1200 and the program manager 1300.

Also, the application system may additionally include parts for displaying the AV data and for processing the user interface, as necessary.

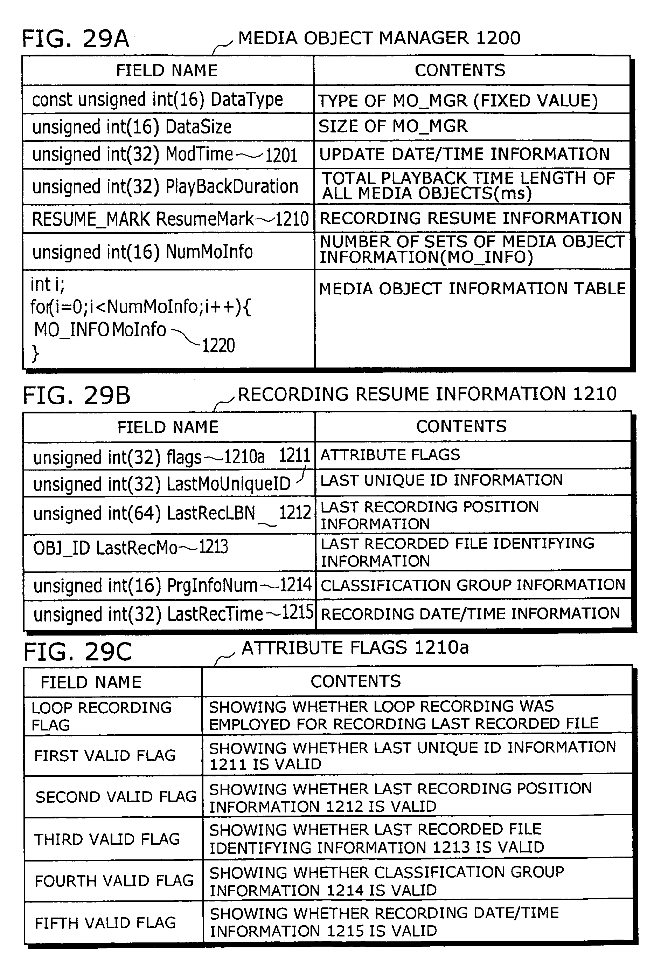

The following is an explanation regarding the data structure of the media object manager 1200 and the program manager 1300, with reference to FIG. 29 to FIG. 33.

FIG. 29A shows an example of a data structure of the media object manager 1200. As shown in FIG. 29A, the media object manager 1200 is composed of: a Data Type indicating a file type; a Data Size indicating a file size; file update date/time information (ModTime) 1201; a Play Back Duration which is a total playback time of all the media objects registered in the media object manager 1200; recording resume information (ResumeMark) 1210; NumMoInfo indicating the number of sets of object management information (MO_INFO) 1220 included in the media object manager 1200; and a table of the object management information composed of the sets of the object management information 1220, with the number of the sets being represented by NumMoInfo.

It should be noted that the notation in the column of the field name in FIG. 29, etc. describes a data type and a field name in sequence. Each data type indicates a meaning as follows, for example.

Const means that the field is a constant, and without const, this means that it is a variable. Unsigned means that the current field is an unsigned value, and without unsigned, this means that it is a singed value. Moreover, int () means that the field is an integer having a bit length that is indicated inside the parentheses. For example, when the value inside the parentheses is "16", it means a 16 bit length.

FIG. 29B shows a data structure of the recording resume information 1210. As shown in FIG. 29B, the recording resume information 1210 is composed of: attribute flags 1210a indicating various attributes of the recording resume information 1210; last unique ID information 1211; last recording position information 1212; last recorded file identifying information 1213; classification group information 1214; and recording date/time information 1215.

The attribute flags 1210a include a loop recording flag and first to fifth valid flags, as shown in FIG. 29C. The loop recording flag shows whether or not the loop recording was employed for the recording of the last recorded file. The first valid flag shows whether or not the last unique ID information 1211 is valid. The second valid flag shows whether or not the last recording position information 1212 is valid. The third valid flag shows whether or not the last recorded file identifying information 1213 is valid. The fourth valid flag shows whether or not the classification group information 1214 is valid. The fifth valid flag shows whether or not the recording date/time information 1215 is valid. Here, the loop recording is the recording which is performed after searching for a space area unidirectionally from the recording position of the last recorded file of the AV data, as shown in each embodiment above. These flags are set by the system controlling unit 104.

The field of the last unique ID information 1211 is the same as the last unique ID information 631 described in the fifth embodiment. As described later, a media unique ID (MoUniqueID) 1222 that is unique at least in the media object manager 1200 is set for each set of the media object information 1220 while a media unique ID 1222 that was most recently assigned in the current media object manager 1200 is set to the last unique ID information 1211.

The field of the last recording position information 1212 is the same as the last recording position information 511 described in the second embodiment. It is the position information of the end of the last recorded file, that is, the part holding a value of the LBN, for example.

The field of the last recorded file identifying information 1213 is the same as the last recorded file identifying information 501 described in the first embodiment. The last recorded file identifying information 1213 stores information for identifying the identifying information of the media file that was most recently recorded by the recording/playback apparatus of the present invention.

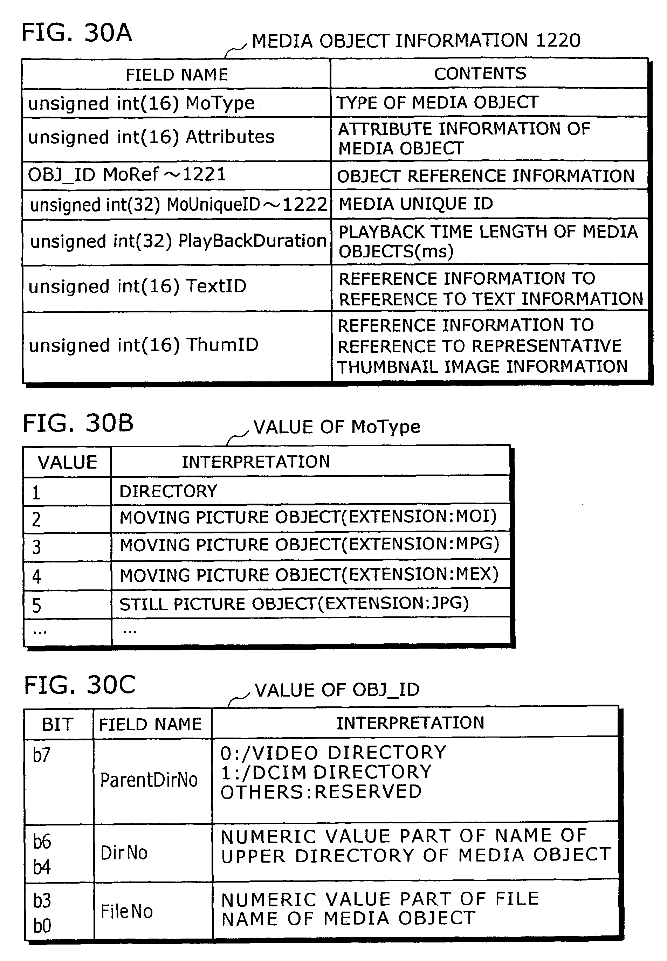

The form of a value to be stored into the last recorded file identifying information 1213 may be a full pathname of the current media file or identifying information obtained through a predetermined conversion rule explained later using FIG. 30 as long as the current media file can be identified.

The field of the classification group information 1214 is the same as the classification group information 521 described in the third embodiment. It is the information specifying a group or directory to which the last recorded file indicated by the last recorded file identifying information 1213 belongs.

It should be noted that a concept corresponding to a group is referred to as program information in the present embodiment. The structure, etc. of the program information will be described later.

As the form of information to be stored into the classification group information 1214, an index value of the corresponding program information 1310 is stored.

Information regarding the date/time when the recording resume information 1210 was recorded and updated is set to the recording date/time information 1215.

Note that the recording date/time information 1215 and the update date/time information 1201 do not always agree with each other. This is because only the update date/time information 1201 is updated when an update occurs to information unrelated to the recording resume information 1210 out of the sets of information included in the media object manager 1200 (such as rewriting of information included the media object information 1200).

FIG. 30A shows a data structure of the media object information (MO_INFO) 1220 included in the media object manager 1200.

The media object information 1220 includes: a MoType indicating type information of a media object to be registered; Attributes indicating various sets of attribute information; object reference information (MoRef) 1221 which is reference information used for referring to the media object; a media unique ID (MoUniqueID) 1222 which is a unique value at least in the media object manager 1200; a Play Back Duration which is a playback time length of the current media object; and reference information used for referring to text information (TextID) and thumbnail image information (ThumID) stored in locations different from the media object manager 1200.

As shown in FIG. 30B, a value to be set to the MoType is determined according to the type of a media object that is a referential destination.

When the value of the MoType is "1", the type of a media object which is registered into a certain set of the object media information is a directory existing on the file system.

Similarly, when the value is "2", it indicates a moving picture object (extension: MOI). When the value is "3", it indicates a moving picture object (extension: MPG). When the value is "4", it indicates a moving picture object (extension: MEX). When the value is "5", it indicates a still picture object (extension: JPG).

From then on, a different value of the MoType is to be set in the same way for each type of a media object.

Moreover, a value to be set to the object reference information 1221 is determined through a conversion of pathname information held by the media object that is the referential destination, according to the predetermined conversion rule shown in FIG. 30C, for example.

In the case of FIG. 30C, the most significant bit "b7" is determined by the pathname of the parent directory of the media object that the media object information 1220 references to. To be more specific, when the parent directory is the VIDEO directory 301, it will be "0", and when it is the DCIM directory 302, it will be "1". Other values are not used in the present embodiment, and for this reason, they are set as reserved.

The following "b6" to "b4" extracts and stores the part corresponding to the directory number of the media object registered in the media object information 1220. Here, the directory number is represented by the numeric value part of the directory name of an upper directory of the media object.

The following "b3" to "b0" extracts and stores the part corresponding to the file number of the media object registered in the media object information 1220. Here, the file number is represented by the numeric value part of the file name of the media object.

For example, suppose that the pathname of the media object is "/VIDEO/100ABCDE/ABCD0001.MOI". Since the current media object has /VIDEO directory as its parent directory, the value of the bit 7 ("b7" in FIG. 30C) of OBJ_ID is "0". Moreover, since the value set to the numeric value part of the upper directory name of the current media object is 100, the value corresponding to the bits 6 to 4 ("b6" to "b4" in FIG. 30C) of OBJ_ID is "100". Furthermore, by extracting the value set to the numeric value part of the file name of the current media object, the value corresponding to the bits 3 to 0 ("b3" to "b0" in FIG. 30C) is "0001".

Accordingly, the value to be set to the object reference information 1221 is 0b01000001 (the first 0b indicates a binary number).

For the case of OBJ_ID employing the form like this, a naming rule should be observed so that a unique value is set for each numeric value part of the names of the media object and its upper directory as is the case with the naming rule according to the DCF standard. By doing so, it is possible to specify the media object, as well as the extension information obtained from the value of the stated MoType, that the object reference information 1221 references to on the file system. Such structure is suited for the purpose of reducing the data volume of the media object information 1220.

Of course, the data structure of OBJ_ID may take other forms as long as the media object information 1220 and the media object can be uniquely associated with each other. For example, there is a method by which the path information of the media object is stored as it is. More specifically, a character string of a full pathname may be stored, with "/" being set as a path delimiter character as in "/VIDEO/100ABCDE/ABCD0001.MOI".

Moreover, instead of the MoType, the extension (such as MPG) of the media object may be included in OBJ_ID.

Note that, as to a moving picture object, only the attribute information file (for example, 1142 in FIG. 24) may be registered into the media object information. This is because the corresponding moving picture file and additional information file (in this case, 1141 and 1143 in FIG. 24) can be found from the attribute information file through the association by the file names as described above. Or, by contrast, the moving picture file may be registered into the media object information 1220. This is because the corresponding attribute information file can be also found.

Alternatively, it is certainly possible to register all the files making up the moving picture object into the media object information 1220. In this case, by registering the files so that the association among the files making up the moving picture object can be seen, it will be convenient when the moving picture object is used.

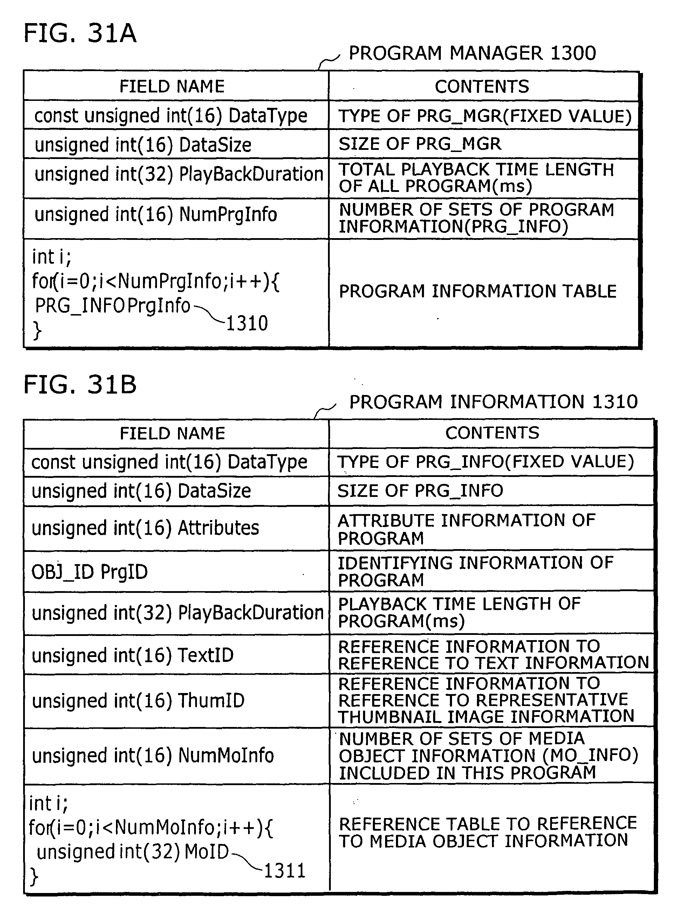

Next, FIG. 31A shows an example of a data structure of the program manager 1300.

In FIG. 31A, the program manager 1300 is a file for classifying and organizing arbitrary media objects by grouping them and for realizing functions such as program playback in a playback sequence desired by the user. It has a structure as follows.

It is composed of: a Data Type indicating a file type; a Data Size indicating a file size; a Play Back Duration which is a total playback time length of all the media objects registered in the program manager 1300; NumPrgInfo indicating the number of sets of program information (PRG_INFO) 1310 included in the program manager 1300; and a program information table composed of the sets of the program information 1310, with the number of the sets being represented by NumPrgInfo.

FIG. 31B shows a data structure of the program information 1310 included in the program manager 1300.

The program information 1310 is a unit that is used for classifying a plurality of media objects recorded to the disc medium 100 by grouping the sets of the media object information 1220 and for realizing the program playback by sequentially playing back the media objects referenced from the program information 1310.

As shown in FIG. 31B, the program information 1310 is composed of: a Data Type indicating that it is the program information; a Data Size indicating a size of the program information 1310; Attributes indicating various sets of attribute information of a program; a Play Back Duration which is a program playback time length; NumMoInfo indicating the number of references of the media object information 1220 included in the program information 1310; and a reference (MoID1311) table used for referring to the sets of the media object information 1220, with the number of the sets being represented by NumMoInfo.

In addition, it may also include reference information used for referring to text information (TextID) and thumbnail image information representing the program, which are stored in locations different from the program information 1310.

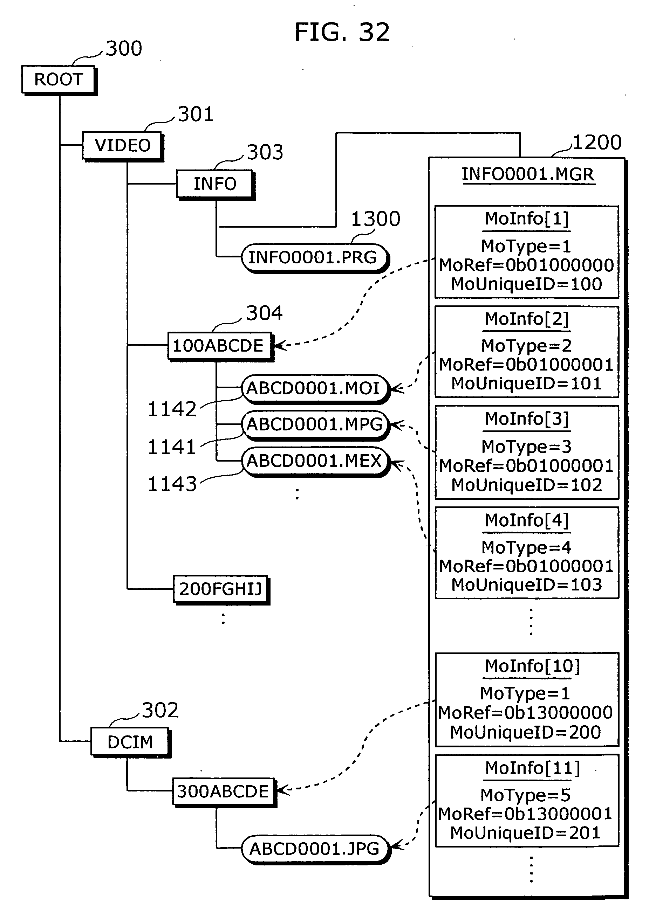

Next, an explanation is given for a relation of the directories and media objects managed by the file system with the media object information 1220, with reference to FIG. 32.

The media object manager 1200 includes a plurality of sets of the media object information 1220, with each set registering a media object. For example, the directory 304 is registered in MoInfo[1].

Here, the value of the field of MoInfo[1] is set as follows. First, on the basis of FIG. 30B, the MoType is set at "1" indicating a directory. On the basis of FIG. 30C, as to the MoRef, the parent directory is "1", the directory number is "100", the file number is "0000", and the field value as a whole is 0b01000000 (the first 0b indicates a binary number). Moreover, "100" is set to the MoUniqueID.

Also, the value of the field of MoInfo[2] is set as follows. First, the MoType is set at "2" indicating a moving picture object (MOI). As to the MoRef, the parent directory is "0", the directory number is "100", the file number is "0001", and the field value as a whole is 0b01000001. To the MoUniqueID, "101" is set.

From then on, the values shown in FIG. 32 are set to the other sets of MoInfo in the same way.

It should be noted that all the files making up the moving picture object are registered in the media object manager 1200 in FIG. 32.

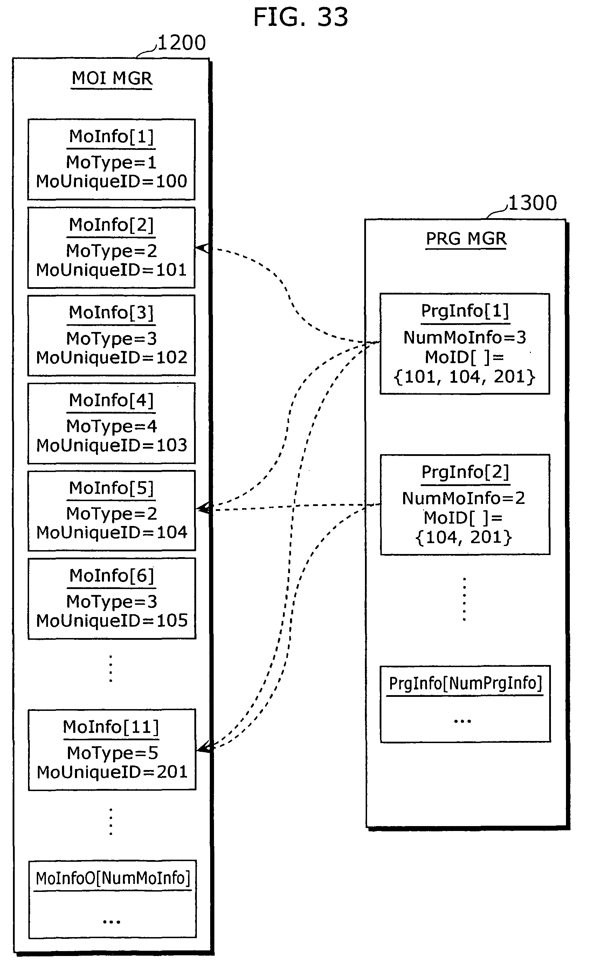

FIG. 33 shows a relation of the program manager 1300 with such media object manager 1200. As described above, the program manager 1300 includes a plurality of sets of the program information 1310 (PrgInfo[1]~).

Each set of the program information 1310 holds the reference information used for referring to the media object information 1220 as a value of the media unique ID. More specifically, the value that the media object information 1220 holds in the media unique ID 1222 is the reference information.

For example, having the references to MoInfo[2], MoInfo[5], and MoInfo[11] as indicated by arrows in broken lines in FIG. 33, PrgInfo[1] holds 101, 104, and 201 as values of the MoID table (MoID[]).

Similarly, having the references to MoInfo[5] and MoInfo[11], PrgInfo[2] holds 104 and 201 as values of the MoID [].

When a directory or a media object is to be recorded to the disc medium 100, the file system processing unit 1152 manipulates the file system information as explained using FIG. 28. To be more specific, when creating a new directory or file on the file system, the file system information processing unit creates the FID 1120 and the EFE 1100 and determines the arrangement of extents in the partition space.

Moreover, the contents management information processing unit 1151 manipulates the media object manager 1200 and the program manager 1300. More specifically, it creates a new set of the media object information 1220 in the media object manager 1200 in order to register the file created by the file system processing unit 1152.

Then, it obtains information from the file system processing unit 1152 as necessary and sets the values so that there will be no contradictions between the file system information and the information in the media object manager 1200. For example, it obtains the pathname information of the file and sets the value that can be obtained by a conversion according to the conversion rule shown in FIG. 30, to the MoRef 1221. Moreover, to the media unique ID 1222, it sets a value that is obtained by adding a predetermined value (1, for example) to the value of the last unique ID information 1211.

When creating a new set of the program information 1310 following an instruction from the user, it obtains the media unique ID 1222 assigned to the media object to be included in the program information 1310 from the media object manager 1200, and sets this to the program information 1310.

In this way, by using the program manager 1300 and the information of the media object manager 320 referenced from it, the program playback, etc. of the media object can be correctly executed.

Next, an explanation is given for processing performed to carry out the program playback in the state of FIG. 33.

When an instruction to start the program playback by the PrgInfo[1] is issued, for example, the contents management information processing unit 1151 reads out the value inside the reference table MoID[] used for referring to the media object information in the PrgInfo[1]. As described above, MoID[] holds the reference information as the media unique ID, that is used for referring to the media object that is subject to the program playback.

Thus, to carry out the program playback is to sequentially play back the media objects indicated by the media unique ID held by the MoID[].

It should be noted that the attribute information file is referenced to out of the moving picture object when the program playback is to be performed for the moving picture object in the present embodiment. Accordingly, the attribute information file is identified from the media unique ID held by the MoID[], and the moving picture file and the additional information file associated with that attribute information are also identified and then played back.

FIG. 34 shows examples of an allocation of the moving picture objects in the partition space in the present embodiment.

FIG. 34A shows an example of an allocation of a moving picture object which is composed of an attribute information file 2000, an additional information file 2001, and a moving picture file 2002.

The additional information file 2001 and the moving picture file 2002 are respectively composed of a plurality of extents 2003 and 2004, and 2005 and 2006. As shown in FIG. 34A, the respective extents are interleaved in a predetermined cycle.

The attribute information file 2000 is allocated into an attribute information allocation area set in a specific area (such as consecutive areas of the inner radius area) on the disc medium.

The attribute information file 2000 includes the cycle and number of this interleaving, or access information used to access each file. Therefore, out of the files making up the moving picture object, the attribute information file 2000 is recorded lastly.

With this being the situation, note that the last recording position information 1212 indicates the position of the end of the extent 2006.

Judging by the sequence of recording, the end of the attribute information file 2000 is to be the position of the last recording position information 1212. However, the attribute information files are allocated into the attribute information allocation area for the purpose of quick access to them in the present embodiment. For this reason, the position of the end of the moving picture file making up the moving picture object is set to the last recording position information 1212.

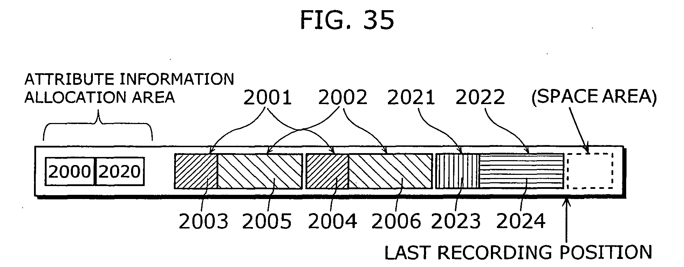

The same explanation can be given for the cases of FIG. 34 and FIG. 35 hereafter.

FIG. 34B is an example of an allocation in the partition space in a case where data is appended to the moving picture object in the state of FIG. 34A.

Extents 2007 and 2008 are respectively appended to the additional information file 2001 and the moving picture file 2002.

When these appended extents are to be allocated, a search for a space area is performed from the last recording position shown in FIG. 34A and the extents are recorded into the area that satisfies a predetermined condition.

In accordance with the appended extents 2007 and 2008, the information in the attribute information file 2000 (such as information regarding the interleaving and access information) is also updated.

In this case, the last recording position information 1212 is also updated so as to indicate the position of the end of the extent 2008.

FIG. 34C shows an example of a different allocation in the partition space in a case where data is appended to the moving picture object in the state of FIG. 34A.

Unlike the case of FIG. 34B, the moving picture object is composed of a plurality of the additional information files 2001 and 2011 and a plurality of the moving picture files 2002 and 2012.

To be more specific, the appended extents 2013 and 2014 are structured as independent files (2011 and 2012 respectively).

In accordance with the appended extents 2013 and 2014, the information in the attribute information file 2000 (such as information regarding the interleaving, access information, and information regarding the association among the files) is also updated.

In this case, the last recording position information 1212 is also updated so as to indicate the position of the end of the extent 2014.

FIG. 35 shows an example of an allocation in the partition space in a case where a new moving picture object (the attribute information file 2010, the additional information file 2011, and the moving picture file 2012) is recorded in the state of FIG. 34A.

A search for a space area is performed from the last recording position shown in FIG. 34A, and the additional information file 2021 and the moving picture file 2022 are arranged as the extents 2023 and 2024 into the retrieved space area in the interleaved manner in a predetermined cycle.

Meanwhile, the attribute information file 2020 is allocated in the attribute information allocation area, as is the case with FIG. 34A. More specifically, the attribute information file 2020 is allocated into the attribute information allocation area without a space area search for which the last recording position information is set as the start position.

Note that the part corresponding to this attribute information allocation area is removed from the space area search for which the last recording position information is set as the start position.

Here, the last recording position information 1212 is updated so as to indicate the position of the end of the extent 2024.

It should be noted that when a new set of moving picture date is recorded in the state in FIG. 34A, whether it is recorded (appended) as in the case of FIG. 34B or recorded (newly recorded) as in the case of FIG. 34C may be instructed by the user or automatically determined by the recording apparatus.

For a case of the automatic determination, by reference to the recording date/time information 1215 and comparing its value with the current date/time, it may be newly recorded if a predetermined condition (that a set period of time has bee elapsed or the date has changed, for example) is satisfied.

Alternatively, flag information showing whether a next recording is appended or newly recorded may be set in an attribute flag in the recording resume information 1210. Then, the recording method may be selected by reference to this flag when the next recording is performed.

Note that, in both cases of FIG. 34 and FIG. 35, a moving picture file (2002 in the case of FIG. 34A, for example) is referenced to as the last file identifying information 1213.

Accordingly, as described in the first embodiment, etc., the logical block number (LBN) at the end of the moving picture file shown by the last recorded file identifying information 1213 is obtained from the information of the file system, and the search for a space area can be performed from that position.

Or, the attribute information file (2000 in the case of FIG. 34A, for example) may be referenced to as the last recorded file identifying information 1213.

The attribute information file and the moving picture file are associated with each other. Therefore, once the attribute information file is found, the corresponding moving picture file is also found. As described above, once the moving picture file is found, it becomes possible to find the logical block number of its end.

In the same way, the additional information file may be referenced to as the last recorded file identifying information 1213.

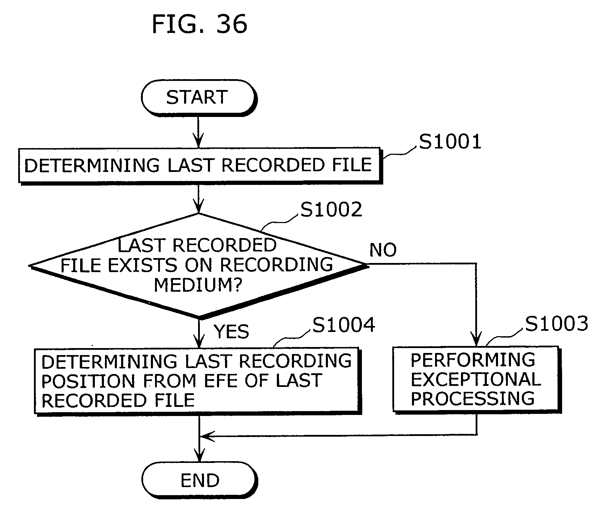

FIG. 36 is a flowchart showing the processing performed for locating the last recording position from the last recorded file identifying information 1213.

First, the last recorded file identifying information 1213 is read from the recording resume information 1212, and the last recorded file as the referential destination is determined (step S1001).

If the last recorded file is not a moving picture file, that is, in the case of an attribute information file, for example, the corresponding moving picture file is to be found and determined as the last recorded file.

Next, the file system such as the UDF is searched to verify whether the last recorded file exists on the disc medium 100 (step S1002).

If not, exceptional processing is performed (step S1003) and the processing is terminated.

Here, by the exceptional processing, the recording operation itself is stopped, or a predetermined value is used as an alternative to the last recording position. A position becoming the alternative to the last recording position is, for example, a start of the partition space or a position at the end of the attribute information arrangement area described in FIG. 34, etc.

If the last recorded file exists on the disc medium 100, the EFE 1100 which manages that last recorded file on the file system is read out. Then, the last recording position is determined from the value of the AD 1110 included in the EFE 1100.

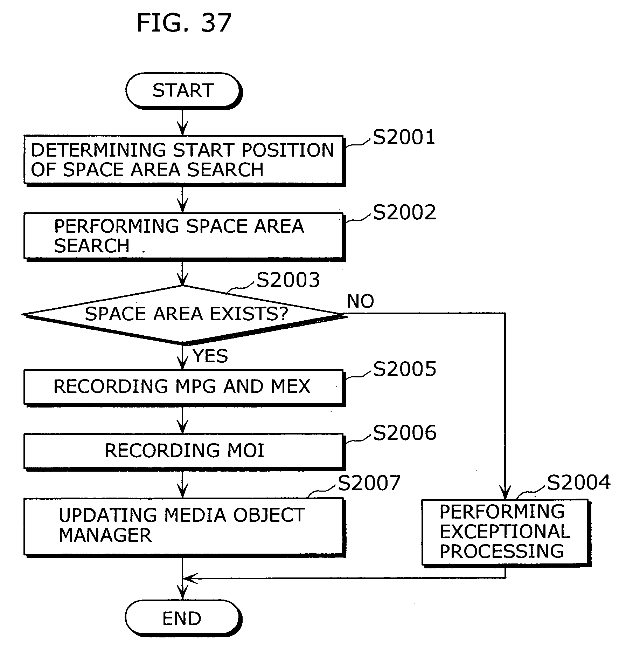

FIG. 37 is a flowchart showing processing performed for recording a moving picture object in the present embodiment.

The system controlling unit 104 references to the recording resume information 1212, and determines the start position of the space area search (step S2001).

To be more specific, it references to the value of the last recording position information 1212 of the recording resume information 1210.

Alternatively, according to the processing steps explained using the flowchart of FIG. 36, the information of the last recording position is obtained from the file referenced from the last recorded file identifying information 1213 and from the information of the file system.

Next, a search for a space area is performed sequentially from the start position of the space area search that was determined in the step S2001 (step S2002). In the case of the UDF, whether it is a space area or not can be determined by sequentially verifying a value for each bit of the space bitmap descriptor.

Whether or not a space area exits is determined (step S2003). If not, exceptional processing, such as ending the recording operation, is performed (step S2004) and the recording processing is terminated.

If the space area exists, the moving picture file (MPG) and the additional information file (MEX) are recorded to the disc medium 100 in the predetermined interleave cycle (step S2005).

When the recording of the moving picture file and the additional information file is finished, the information of the attribute information file (MOI) becomes completely definite and it is recorded into the attribute information allocation area (step S2006).

Then, each file making up the moving picture object is registered into the media object manager 1200 (step S2007), and the processing is terminated.

For registering the moving picture object into the media object manager 1200, a program into which the current moving picture is to be registered may be determined by reference to the classification group information 1214.

For example, if it is registered into the group which is the same as the group indicated by the classification group information 1214, the moving picture objects that are consecutive in terms of time can be managed as the same program.

Alternatively, the recording date/time information 1215 may be compared with the recording date/time of the current moving picture object. If a predetermined condition (that a set period of time has bee elapsed or the date has changed, for example) is satisfied, a new set of the program information 1310 different from the program indicated by the classification group information 1214 may be created so that the current moving picture object can be registered therein. With this, it becomes possible to classify the moving picture objects for each date, for example.

It should be noted that the file system such as the UDF is updated at a necessary timing as occasion arises, and the explanation for this is omitted here.

In the present embodiment, the explanation has been given for a case where the moving picture object is composed of two types of files in addition to the attribute information file. However, it may be composed of more types of files. The same can be said for the following embodiments.

Moreover, in the present embodiment, the explanation has been given on the precondition that the loop recording flag and the first to fifth valid flags included in the attribute flags are valid. However, the system controlling unit 104 sets valid or invalid for each flag according to the circumstances. For example, the system controlling unit 104 may select whether or not to perform the loop recording following the user operation and then set the loop recording flag. The system controlling unit 104 enables the loop recording by setting at least one of the last unique ID 1211, the last recording position information 1212, and the last recorded file identifying information 1213. It may set the valid flag corresponding to the set information as valid while setting the valid flag corresponding to the unset information as invalid. Moreover, the system controlling unit 104 may select whether or not to set the classification group information 1214 and the recording date/time information 1215 following the instruction from the user and then may set the fourth and fifth valid flags. For doing so, the system controlling unit 104 may reference to only the valid information indicated by the first to fifth valid flags.

(Seventh Embodiment)

In the present embodiment, an explanation will be given for an example of an allocation of a moving picture object into the partition space, the allocation being different from the cases of FIG. 34 and FIG. 35.

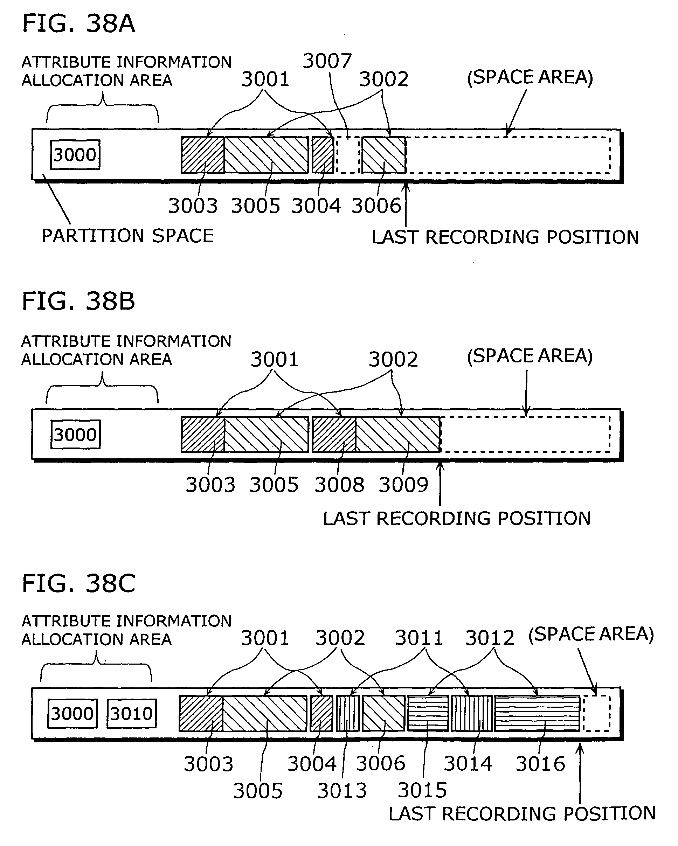

FIG. 38A shows a state where data is recorded with its volume not corresponding to the interleave cycle of the moving picture file and the additional information file.

The moving picture object here is composed of an attribute information file 3000, an additional information file 3001, and a moving picture file 3002.

Moreover, the additional information file 3001 is composed of extents 3003 and 3004, and the moving picture file 3002 is composed of extents 3005 and 3006.

As described above, since the interleave cycle and the volume of data are out of sync with each other, a space area 3007 exists between the extent 3003 and the extent 3006.

With this being the situation, FIG. 38B shows an example where a new set of data is recorded.

Here, data is appended to the extent 3004 and the extent 3006, which then become extents 3008 and 3009 respectively.

In FIG. 38A, the last recording position of the recording resume information 1210 indicates the end of the extent 3006. In the case of FIG. 38B, additional information is appended to the space area 3007 and moving pictures are appended from the last recording position onward.

Meanwhile, although the case of FIG. 38C is the same as the case of FIG. 38B in that the data is recorded into the space area 3007 regardless of the last recording position, it is different in that the data allocated there makes up independent files.

To be more specific, in FIG. 38C, there are: an additional information file 3011 composed of extents 3013 and 3014; and a moving picture file 3012 composed of extents 3015 and 3016. An attribute information file 3010, the additional information file 3011, and the moving picture file 3012 make up the moving picture object.

It should be noted that when a new set of moving picture date is recorded in the state of FIG. 38A, whether it is to be recorded (appended) as in the case of FIG. 38B or recorded (newly recorded) as in the case of FIG. 38C may be instructed by the user or automatically determined by the recording apparatus.

For a case of the automatic determination, by reference to the recording date/time information 1215 and comparing its value with the current date/time, it may be newly recorded if a predetermined condition (that a set period of time has bee elapsed or the date has changed, for example) is satisfied.

Alternatively, flag information showing whether a next recording is appended or newly recorded may be set in an attribute flag in the recording resume information 1210. Then, the recording method may be selected by reference to this flag when the next recording is performed.

Accordingly, even in the event of an interruption of the data recording, it is possible to effectively use the space area according to the present embodiment.

(Eighth Embodiment)

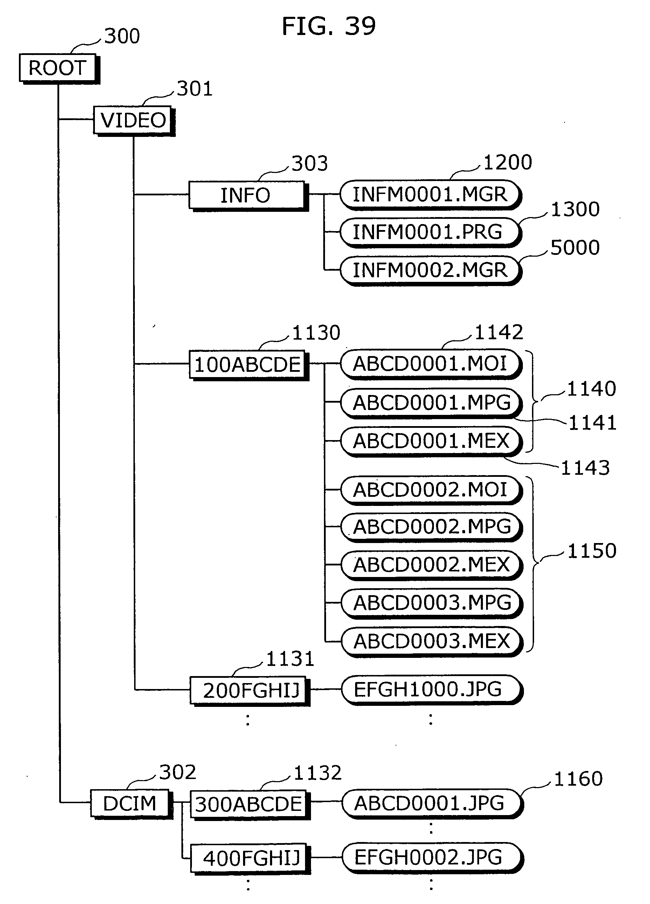

In the present embodiment, an explanation will be given for a case where a plurality of media object managers (1200 and 5000) exist as shown in FIG. 39.

In a case where a limit is caused to the maximum size of the media object manager for some reason (because of the limited implementation of the system, for example) and the number of media objects exceeding this maximum size are to be managed, setting a plurality of media object managers may be considered.

In such a case, there will be a plurality of sets of the recording resume information 1210 and it will be unclear whether their values can be used for the space area search.

Hence, in the present embodiment of the present invention, all the values of the sets of the recording data/ time information 1215 in the media object managers are compared and, on the basis of the information stored in the recording resume information 1210 with the most recent date, the start position of the space area search is determined.

As another method, out of the plurality of the media object managers, only one may have the valid recording resume information 1210.

When a new moving picture object is recorded in this case, it will be registered into one of the plurality media object managers. Note that the recording resume information 1210 to be updated here always belongs to a fixed media object manager.

For example, the recording resume information 1210 of the media object manager whose file number is 0001 (the media object manager 1200 in FIG. 39) may be always used.

Moreover, as another method, the attribute flags 1210a of the recording resume information 1210 of each media object manager may be used. Only one media object manager out of the plurality of the media object managers may show the valid state while all the others may show the invalid states.

In a case where the recording resume information 1210 is used, the attribute flags 1210a of all the existing media object managers may be verified and then the valid recording resume information 1210 may be used.

Furthermore, as another method, one media object manager may be set as a base (the one having the smallest file number, for example. The media object manager 1200 in FIG. 39). Into that, information specifying the valid media object manager may be stored.

To be more specific, reference information used for referring to the media object manager which has the valid recording resume information may be stored in the base media object manager (in such a form as the object reference information 1221, for example).

When the recording resume information 1210 is used, the base media object manager is firstly referenced to so that the identifying information of the media object manager which has the valid recording resume information 1210 is obtained. Then, the recording resume information 1210 is read out from this particular media object manager to be used.

Accordingly, the recording resume information can be used with no problems even in a case where a plurality of the media object managers exist.

(Ninth Embodiment)

The present embodiment describes a different method of storing the recording resume information 1210.

In the present embodiment, the recording resume information 1210 is stored in the extended attribute defined by the UDF standard.

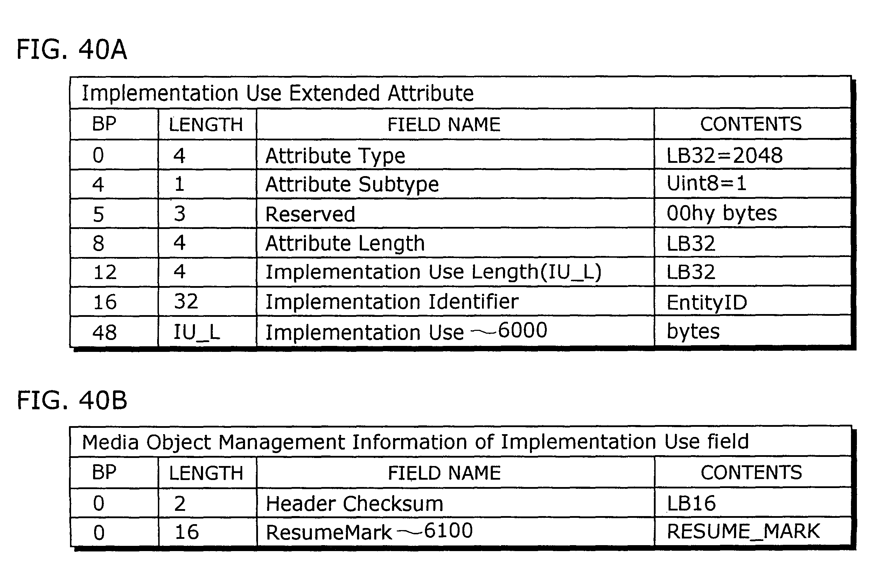

To be more specific, data shown in FIG. 40A is stored into the EAs 1101 held by each EFE 1100. Then, into an Implementation Use 6000 included there, the recording resume information 6100 is stored according to a data structure shown in FIG. 40B.

The recording resume information 6100 and the recording resume information 1210 have the same structure.

Using the structure of the present embodiment, it is possible to have the recording resume information in the EFE 1100 of the directory (for example, the VIDEO directory 301 or the DCIM directory 302) even if no special file, such as a media object manager, exists. Thus, it becomes possible to expand its application area wider.

Alternatively, unlike the eighth embodiment, the recording resume information 1210 may not be stored into the media object manager when a plurality of the media object managers exist, and it may be stored in one EFE 1100 as in the present embodiment.

It should be noted that the recording resume information 1210 may be stored, not in the extended attribute information, but in a Named Stream which can realize the same function as the extended attribute.

The structures of the media object manager 1200 and the program manager 1300 have been shown in the sixth embodiment and so forth. However, the structures do not have to be so. For example, a single file including the same information as the media object manager 1200 and the program manager 1300 may be structured.

In all the embodiments described above, the recording/playback apparatus and the recording medium have been explained, taking an optical disc medium, such as a DVD, as an example. However, they are not limited in particular, and they may be respectively a hard disc drive using another magnetic recording medium and an optical magnetic disc medium, or other recording apparatuses and recording media.

As described so far, using the recording/playback apparatus of the embodiments of the present invention, the classification into the groups can be brought in line with the physical arrangement on the recording medium when media files are recorded. Also, when the recorded media files are to be played back in order of management by the group, the access operation by a recording/playback means such as an optical pickup can be reduced. Thus, a plurality of media files can be played back without interruption.

In a case where a moving picture object is composed of a plurality of files, the same effect can be obtained.

Moreover, in a case where a plurality of directories and groups exist on the disc, the previous classification location can be quickly found.

Furthermore, since the defect management is performed on the group information and the resume information, its reliability can be increased.

Also, it is possible to quickly determine the unique ID value to be assigned to a new media file.

The frequency in use of the space areas on the disc medium 100 will be averaged as a consequence, so that the life of the disc medium 100 can be extended.

**Industrial Applicability**

The present invention is suitable for a recording/ playback apparatus which records or plays back video data files to or from a recording medium. For example, it is suitable for: an optical disc recording/playback apparatus, such as a DVD recorder or a DVD camcorder; a video recorder which uses a hard disc as a recording medium; and a home server which has a recording function.

**Claims**

1. A recording/playback apparatus for recording or playing back a video data file to/from a recording medium, comprising:

   a recording unit operable to record a video data file, an additional data file related to the video data file, and management information which includes recording resume information indicating a last recorded file; and
   a controlling unit operable to control the recording unit to record the recording resume information indicating the video data file which was most recently recorded as the last recorded file, into the management information when the video data file and the additional data file are recorded by the recording unit.

2. The recording/playback apparatus according to Claim 1,
   wherein the recording resume information includes file identifying information indicating the video data file that was most recently recorded.

3. The recording/playback apparatus according to Claim 2,
   wherein the additional data file is used for reserving a recording area for a post recording, and
   the recording unit records the video data file and the additional data file in an interleaved manner.

4. The recording/playback apparatus according to Claim 3,
   wherein the recording unit further records an attribute information file which indicates an attribute of the video data file into a predetermined area.

5. The recording/playback apparatus according to Claim 3,
   wherein immediately before a new video data file and a new additional data file are recorded, the controlling unit further obtains a last recording position of the last recorded file on the basis of the recording resume information, searches for a space area unidirectionally from the last recording position, and determines a start of the space area as a recording start position, and
   the recording unit records the new video data file and the new additional data file from the determined recording start position.

6. The recording/playback apparatus according to Claim 5,
   wherein the management information further includes a loop recording flag indicating whether or not the last recorded file was recorded by a loop recording, and
   the controlling unit controls a setting of the loop recording flag.

7. The recording/playback apparatus according to Claim 5,
   wherein the management information further includes a valid flag indicating whether or not the file identifying information is valid, and
   the controlling unit controls an update of the valid flag.

8. The recording/playback apparatus according to Claim 5,
   wherein the management information further includes entry information indicating a group to which the last recorded video data file belongs, and
   the controlling unit controls a setting of the entry information.

9. The recording/playback apparatus according to Claim 8,
   wherein the management information further includes a valid flag indicating whether or not the entry information is valid, and
   the controlling unit controls a setting of the valid flag.

10. The recording/playback apparatus according to Claim 5,
    wherein the management information further includes date and time information indicating a recording date and time when the last recorded video data file was recorded, and
    the controlling unit controls a setting of the date and time information.

**11.** The recording/playback apparatus according to Claim 10,
wherein the management information further includes a valid flag indicating whether or not the date and time information is valid, and
the controlling unit controls a setting of the valid flag.

**12.** The recording/playback apparatus according to Claim 1,
wherein the recording resume information includes position information indicating a last recording position of the last recorded video data file on the recording medium.

**13.** The recording/playback apparatus according to Claim 1,
wherein the recording resume information includes identifying information indicating a group to which the last recorded video data file belongs.

**14.** The recording/playback apparatus according to Claim 1,
wherein the controlling unit assigns a unique ID to each of the video data file and the additional data file, and
the recording resume information includes a unique ID of the last recorded video data file.

**15.** The recording/playback apparatus according to Claim 1,
wherein before a recording of a new video data file and a new additional data file to the recording medium is started, the controlling unit determines a classification group and a recording start position for each of the new video data file and the new additional data file.

**16.** The recording/playback apparatus according to Claim 15,
wherein immediately before a new video data file and a new additional data file are recorded, the controlling unit further obtains a last recording position of the last recorded file on the basis of the recording resume information, searches for a space area unidirectionally from the last recording position, and determines a start of the space area as a recording start position, and
the recording unit records the new video data file and the new additional data file from the determined recording start position.

**17.** A recording/playback method of recording or playing back a video data file to/from a recording medium, comprising:

a first recording step of recording a video data file and an additional data file related to the video data file to the recording medium; and
a second recording step of recording management information, which includes recording resume information indicating the video data file which was most recently recorded as a last recorded file, to the recording medium when the recording of the video data file and the additional data file in the first recording step is completed.

**18.** A program causing a computer to execute a recording or a playback of a video data file to/from a recording medium, the program causing the computer to execute:

a first recording step of recording a video data file and an additional data file related to the video data file to the recording medium; and
a second recording step of recording management information, which includes recording resume information indicating the video data file which was most recently recorded as a last recorded file, to the recording medium when the recording of the video data file and the additional data file in the first recording step is completed.

**19.** A recording medium which is capable of a recording and a playback performed by a computer, recording
a video data file, an additional data file related to the video data file, and management information,
wherein the video data file and the additional data file are recorded in an interleaved manner, and
the management information includes recording resume information indicating a last recorded video data file.

# FIG. 1

ANALOG BROADCASTING

DIGITAL BROADCASTING

TV

PC

VIDEO SIGNAL

STB

DIGITAL SIGNAL

VIDEO SIGNAL

AUDIO

VIDEO

DVD-RECORDER

REMOTE CONTROLLER

DVD

DVD CAMCORDER

STILL PICTURE

REMOTE CONTROLLER

EP 1 553 595 A1

# FIG. 2

110 DRIVE APPARATUS

104 SYSTEM CONTROLLING UNIT

102 ECC PROCESSING UNIT

103 TRACK BUFFER

105 SYSTEM BUS

101

100

1 SECTOR=2KB

1ECC BLOCK=16 SECTORS

FIG. 3A

SEEK

VOLUME

| | CONTINUOUS AREA A1 | | CONTINUOUS AREA A2 | |
|---|---|---|---|---|

0    a1              a2    a3              a4

FIG. 3B

B ACCUMULATED VOLUME OF DATA IN TRACK BUFFER

$B(t2)$

$Va-Vb$

$-Vb$

t1              t2    t3    t

READOUT FROM
CONTINUOUS AREA A1

SEEK

EP 1 553 595 A1

## FIG. 4

USER I/F UNIT — 200

SYSTEM CONTROLLING UNIT — 104

ANALOG BROADCASTING TUNER — 210

MOVING PICTURE ENCODER — 221

MOVING PICTURE DECODER — 240

DISPLAYING UNIT — 250

CAMERA UNIT — 211

STILL PICTURE ENCODER — 222

STILL PICTURE DECODER — 241

DIGITAL BROADCASTING TUNER — 212

ANALYZING UNIT — 223

IEEE1394 · · · ·

DIGITAL I/F UNIT — 230

TRACK BUFFER — 103

DRIVE APPARATUS — 110

105

100

EP 1 553 595 A1

FIG. 5A

FIG. 5B

EP 1 553 595 A1

FIG. 6A

| SPARE AREA | USER AREA |

0 ———————LSN————————→ Last LSN

VOLUME SPACE

FIG. 6B

0 ———————————LSN———————————→ Last LSN

VOLUME SPACE

FILE STRUCTURE AND FILE

VOLUME STRUCTURE INFORMATION     VOLUME STRUCTURE INFORMATION

INNER ——————————————————→ OUTER

PARTITION SPACE

0 ———————LSN———————→ Last LBN

FIG. 7A

ROOT `300` — VIDEO `301` — INFO `303` — GRP DATA `310`

`311`
DIR001 — MOV001.MPG
MOV001.MOI
MOV002.MPG
MOV002.MOI
STL103.JPG

DIR002 — STL101.JPG
MOV002.MPG
MOV002.MOI
⋮

DCIM `302` — 100ABCDE — ABCD0001.JPG
⋮
100FGHIJ — EFGH0002.JPG
⋮

FIG. 7B

| LEAD-IN | VOLUME | PARTITION | LEAD-OUT |

`100`

EP 1 553 595 A1

## FIG. 8

| | |
|---|---|
| GENERAL ATTRIBUTE INFORMATION | 310 |
| GROUP INFORMATION  MANAGEMENT TABLE | 401 |
| RESUME INFORMATION  MANAGEMENT TABLE | 402 |

FIG. 9

| GROUP INFORMATION MANAGEMENT TABLE | ~401 |

| GENERAL ATTRIBUTE INFORMATION |
| GROUP MANAGEMENT INFORMATION#1 |
| GROUP MANAGEMENT INFORMATION#2 |
| ... |
| GROUP MANAGEMENT INFORMATION#n |

410

| GENERAL ATTRIBUTE INFORMATION | 411 |
| FILE IDENTIFYING INFORMATION#1 |
| FILE IDENTIFYING INFORMATION#2 |
| ... |
| FILE IDENTIFYING INFORMATION#n |

EP 1 553 595 A1

## FIG. 10

```
                                            ┌─────────────────────────┐
                                   500 ─────│ TYPE INFORMATION=       │
                                            │ "RECORD 1"              │
                  402              ┌─────────├─────────────────────────┤──501
                                   │ GENERAL ATTRIBUTE │ LAST RECORDED FILE      │
┌──────────────────────┐          │ INFORMATION       │ IDENTIFYING INFORMATION │
│ RESUME INFORMATION   │──────────├───────────────────┘─────────────────────────┘
│ MANAGEMENT TABLE     │          │ RESUME            │
└──────────────────────┘          │ INFORMATION#1     │
                                   ├───────────────────┤
                                   │ RESUME            │──420
                                   │ INFORMATION#2     │
                                   ├───────────────────┤
                                   │ ...               │
                                   ├───────────────────┤
                                   │ RESUME            │
                                   │ INFORMATION#n     │
                                   └───────────────────┘
```

FIG. 11A

300 ROOT

301 VIDEO

303 INFO — GRP DATA 310

DIR001 — MOV001.MPG
MOV001.MOI
STL102.JPG

FIG. 11B

LAST RECORDING POSITION

SPACE AREA SEARCH

LAST RECORDED FILE

| UDF INFOR-MATION | DIRECTO-RIES, ETC. | GRP_DATA 310 | (SPACE AREA 1) | MOV001.MPG | STL102.JPG | (SPACE AREA 2) |

0 — LBN — Last LBN

PARTITION SPACE

## FIG. 12A

410a

| ENTRY | VALUE |
|---|---|
| GENERAL ATTRIBUTE INFORMATION | NUMBER OF SETS OF FILE IDENTIFYING INFORMATION=2<br>CORRESPONDING DIRECTORY="/VIDEO/DIR001"<br>... |
| FILE IDENTIFYING INFORMATION#1 | "/VIDEO/DIR001/MOV001.MPG" |
| FILE IDENTIFYING INFORMATION#2 | "/VIDEO/DIR001/STL002.JPG" |

## FIG. 12B

500a

| ENTRY | VALUE |
|---|---|
| TYPE INFORMATION | "RECORD 1" |
| LAST RECORDED FILE IDENTIFYING INFORMATION | "/VIDEO/DIR001/STL002.JPG" |

EP 1 553 595 A1

FIG. 13A

ROOT `300` — VIDEO `301` — INFO `303` — GRP DATA `310`

INFO — DIR001 — MOV001.MPG
MOV001.MOI
STL102.JPG
STL103.JPG ← NEW MEDIA FILE

FIG. 13B

| UDF INFOR-MATION | DIRECTO-RIES,ETC. | GRP_DATA | (SPACE AREA 1) | MOV001.MPG | STL102.JPG | STL103.JPG | (SPACE AREA 2') |

LAST RECORDED FILE

LAST RECORDING POSITION

SPACE AREA SEARCH

←————————————— LBN —————————————→

0 — PARTITION SPACE — Last LBN

EP 1 553 595 A1

## FIG. 14A

410b

| ENTRY | VALUE |
|---|---|
| GENERAL ATTRIBUTE INFORMATION | NUMBER OF SETS OF FILE IDENTIFYING INFORMATION=2<br>CORRESPONDING DIRECTORY="/VIDEO/DIR001"<br>... |
| FILE IDENTIFYING INFORMATION#1 | "/VIDEO/DIR001/MOV001.MPG" |
| FILE IDENTIFYING INFORMATION#2 | "/VIDEO/DIR001/STL002.JPG" |
| FILE IDENTIFYING INFORMATION#3 | "/VIDEO/DIR001/STL003.JPG" |

PLAYBACK SEQUENCE

## FIG. 14B

500b

| ENTRY | VALUE |
|---|---|
| TYPE INFORMATION | "RECORD" |
| LAST RECORDED FILE IDENTIFYING INFORMATION | "/VIDEO/DIR001/STL003.JPG" |

EP 1 553 595 A1

# FIG. 15

```
                                                                      510
                        402                    ┌──────────────────────────┐
                                               │ TYPE INFORMATION=        │
┌──────────────────────┐    ┌──────────────────┤ "RECORD 2"               │
│ RESUME INFORMATION   │    │ GENERAL ATTRIBUTE │──────────────────────────│
│ MANAGEMENT TABLE     │    │ INFORMATION       │ LAST RECORDED FILE       │  501
└──────────────────────┘    ├──────────────────┤ IDENTIFYING INFORMATION  │
                            │ RESUME            │──────────────────────────│
                            │ INFORMATION#1     │ LAST RECORDING           │  511
                            ├──────────────────┤ POSITION INFORMATION     │
                            │ RESUME            └──────────────────────────┘
                            │ INFORMATION#2     │
                            ├──────────────────┤
                            │ ...               │
                            ├──────────────────┤
                            │ RESUME            │
                            │ INFORMATION#n     │
                            └──────────────────┘
```

## FIG. 16

GROUP INFORMATION MANAGEMENT TABLE — 401

| GENERAL ATTRIBUTE INFORMATION |
| GROUP MANAGEMENT INFORMATION#1 |
| GROUP MANAGEMENT INFORMATION#2 |
| ... |
| GROUP MANAGEMENT INFORMATION#n |

INDEX VALUE=2

| ENTRY | VALUE |
|---|---|
| GENERAL ATTRIBUTE INFORMATION | NUMBER OF SETS OF FILE IDENTIFYING INFORMATION=3 ... |
| FILE IDENTIFYING INFORMATION#1 | "/VIDEO/DIR002/STL101.JPG" |
| FILE IDENTIFYING INFORMATION#2 | "/VIDEO/DIR002/MOV002.MPG" |
| FILE IDENTIFYING INFORMATION#3 | "/DCIM/100ABCDE/ABCD001.JPG" |

EP 1 553 595 A1

## FIG. 17

EP 1 553 595 A1

RESUME INFORMATION MANAGEMENT TABLE ⟋402

| |
|---|
| GENERAL ATTRIBUTE INFORMATION |
| RESUME INFORMATION#1 |
| RESUME INFORMATION#2 |
| ... |
| RESUME INFORMATION#n |

⟋520

| |
|---|
| TYPE INFORMATION= "RECORD 3" |
| LAST RECORDED FILE IDENTIFYING INFORMATION ⟋501 |
| LAST RECORDING POSITION INFORMATION ⟋511 |
| CLASSIFICATION GROUP INFORMATION="2" ⟋521 |

# FIG. 18

RECORDING RESUME INFORMATION

| LAST RECORDED FILE IDENTIFYING INFORMATION |
| LAST RECORDING POSITION INFORMATION |

(DEFECTIVE SECTOR REPLACEMENT)

310

| SPARE AREA | | UDF INFOR-MATION | GRP_DATA | ... | MOVE001.MPG | ... | | |

←——————LBN—PARTITION SPACE——————→

←————————LSN—VOLUME SPACE————————→

←——————————PSN—PHYSICAL SECTOR SPACE——————————→

EP 1 553 595 A1

## FIG. 19

RECORDING RESUME INFORMATION

| LAST RECORDED FILE IDENTIFYING INFORMATION |
| LAST RECORDING POSITION INFORMATION |

(DEFECTIVE SECTOR REPLACEMENT)

310

| | | SPARE AREA | | UDF INFOR-MATION | GRP_DATA | ... | MOVE001.MPG | ... | | |

←————LBN—PARTITION SPACE————→

←————LSN—VOLUME SPACE————→

←————PSN—PHYSICAL SECTOR SPACE————→

EP 1 553 595 A1

# FIG. 20

```
                                              600
┌─────────────────────────────────────────────┐
│ GENERAL ATTRIBUTE INFORMATION                │
├──────────────────────────────────────────────┤  603
│ RESUME INFORMATION MANAGEMENT TABLE          │
├──────────────────────────────────────────────┤  602
│ GROUP INFORMATION MANAGEMENT TABLE           │
├──────────────────────────────────────────────┤  601
│ FILE INFORMATION MANAGEMENT TABLE            │
└─────────────────────────────────────────────┘
```

FIG. 21A

601

FILE INFORMATION
MANAGEMENT TABLE

| GENERAL ATTRIBUTE INFORMATION |
| FILE MANAGEMENT INFORMATION#1 |
| FILE MANAGEMENT INFORMATION#2 |
| ... |
| FILE MANAGEMENT INFORMATION#n |

610

| GENERAL ATTRIBUTE INFORMATION |
| FILE IDENTIFYING INFORMATION | 611 |
| UNIQUE ID INFORMATION | 612 |

FIG. 21B

| ENTRY | VALUE OF FILE IDENTIFYING INFORMATION | VALUE OF UNIQUE ID INFORMATION |
|---|---|---|
| FILE IDENTIFYING INFORMATION#1 | "/VIDEO/DIR002/STL101.JPG" | 1 |
| ... | ... | ... |
| FILE IDENTIFYING INFORMATION#5 | "/VIDEO/DIR002/MOV002.MPG" | 10 |
| ... | ... | ... |
| FILE IDENTIFYING INFORMATION#19 | "/DCIM/100ABCDE/ABCD0001.JPG" | 5 |
| FILE IDENTIFYING INFORMATION#20 | "/DCIM/100ABCDE/ABCD0002.JPG" | 20 |

## FIG. 22A

GROUP INFORMATION MANAGEMENT TABLE — 602

| |
|---|
| GENERAL ATTRIBUTE INFORMATION |
| GROUP MANAGEMENT INFORMATION#1 |
| GROUP MANAGEMENT INFORMATION#2 |
| ... |
| GROUP MANAGEMENT INFORMATION#n |

620 / 621

| |
|---|
| GENERAL ATTRIBUTE INFORMATION |
| FILE REFERENCE INFORMATION#1 |
| FILE REFERENCE INFORMATION#2 |
| ... |
| FILE REFERENCE INFORMATION#n |

## FIG. 22B

| ENTRY | VALUE |
|---|---|
| GENERAL ATTRIBUTE INFORMATION | NUMBER OF SETS OF FILE REFERENCE INFORMATION=3 ... |
| FILE IDENTIFYING INFORMATION#1 | 1 |
| FILE IDENTIFYING INFORMATION#2 | 10 |
| FILE IDENTIFYING INFORMATION#3 | 5 |

EP 1 553 595 A1

# FIG. 23

RESUME INFORMATION MANAGEMENT TABLE — 603

GENERAL ATTRIBUTE INFORMATION
RESUME INFORMATION#1
RESUME INFORMATION#2
...
RESUME INFORMATION#n

630

| TYPE INFORMATION= "RECORD 3" | |
| LAST RECORDED FILE IDENTIFYING INFORMATION | 501 |
| LAST RECORDING POSITION INFORMATION | 511 |
| LAST UNIQUE ID INFORMATION | 631 |

EP 1 553 595 A1

ESP 1 553 595 A1

# FIG. 24

```
300
ROOT
      301
      VIDEO
                  303              1200
                  INFO ── INFM0001.MGR
                                              1300
                         └ INFM0001.PRG
                  1130             1142
                  100ABCDE ── ABCD0001.MOI
                                              1140
                            ── ABCD0001.MPG
                                              1141
                            └ ABCD0001.MEX
                                              1143
                            ── ABCD0002.MOI
                            ── ABCD0002.MPG
                            ── ABCD0002.MEX   1150
                            ── ABCD0003.MPG
                            └ ABCD0003.MEX
                  1131
                  200FGHIJ ── EFGH1000.JPG
                  :                :
      302         1132                         1160
      DCIM ── 300ABCDE ── ABCD0001.JPG
                  :                :
           └ 400FgHIJ ── EFGH0002.JPG
                  :                :
```

55

1020

FSD

1021

EFE(Root)
Unique ID=0

ADs

**FIG. 25A**

Root DIRECTORY    1022

FID(VIDEO)
UDF Unique ID=97

FID(DCOM)
UDF Unique ID=98

EFE(Video)
Unique ID=97

ADs

Video DIRECTORY

FID(100ABCDE)
UFDUniqueID=100

EFE(100ABCDE)
Unique ID=100

ADs

EFE(ABCD0001.MOI)
UniqueID=101

ADs

100ABCDE
DIRECTORY

FID(ABCD0001.MOI)
UFDUniqueID=101

ABCD0001.MOI FILE

1023

**FIG. 25B**

1030  1020                                              1023

FSD → EFE ↗ FID → EFE ⌇ → FID ↗ EFE ↗ extent

1021        1022

PARTITION SPACE

## FIG. 26A

FSD1020

| BP | LENGTH | FIELD NAME | CONTENTS |
|---|---|---|---|
| 0 | 16 | Descriptor Tag | Tag |
| ... | ... | ... | ... |
| 400 | 16 | Root Directory ICB | long_ad |
| ... | ... | ... | ... |
| 464 | 16 | System Stream Directory ICB | long_ad |
| ... | ... | ... | ... |

## FIG. 26B

long_ad

| RBP | LENGTH | FIELD NAME | CONTENTS |
|---|---|---|---|
| 0 | 4 | Extent Length | Uint32 |
| 4 | 6 | Extent Location | Ib_addr |
| 10 | 6 | Implementation Use | byte |

## FIG. 26C

ADImpUse

| BP | LENGTH | FIELD NAME | CONTENTS |
|---|---|---|---|
| 0 | 2 | Flags | Uint16 |
| 2 | 4 | UDF Unique ID | Uint32 |

## FIG. 27A

Extended File Entry(EFE) 1100

| BP | LENGTH | FIELD NAME | CONTENTS |
|---|---|---|---|
| 0 | 16 | Descriptor Tag | Tag |
| ... | ... | ... | ... |
| 152 | 16 | Stream Directory ICB | long_ad |
| ... | ... | ... | ... |
| 200 | 8 | Unique ID | Uint64 |
| 208 | 4 | Length of Extended Attribute(=L_EA) | Uint32 |
| 212 | 4 | Length of Allocation Descriptors(=L_D) | Uint32 |
| 216 | L_EA | Extended Attributes(EAs) ~1101 | bytes |
| [L_EA+216] | L_AD | Allocation Descriptors(ADs) ~1110 | bytes |

## FIG. 27B

Allocation Descriptor(AD) 1110

| RBP | LENGTH | FIELD NAME | CONTENTS |
|---|---|---|---|
| 0 | 4 | Extend Length | Uint32 |
| 4 | 4 | Extent Position | Uint32 |

## FIG. 27C

FID 1120

| RBP | LENGTH | FIELD NAME | CONTENTS |
|---|---|---|---|
| 0 | 16 | Descriptor Tag | Tag |
| ... | ... | ... | ... |
| 18 | 1 | File Characterristics | Uint8 |
| 19 | 1 | Length of File Identifier(=L_FI) | Uint8 |
| 20 | 16 | ICB | long_ad |
| ... | ... | ... | ... |
| [L_IU+38] | L_FI | File Identifier ~1121 | d-character |
| ... | ... | ... | ... |

## FIG. 28

1300 — PROGRAM MANAGER

1200 — MEDIA OBJECT MANAGER

DIRECTORY/ MEDIA OBJECT

FILE SYSTEM INFORMATION

104    1151

APPLICATION SYSTEM

CONTENTS MANAGEMENT INFORMATION PROCESSING UNIT

OPERATING SYSTEM

FILE SYSTEM PROCESSING UNIT

1152

100

110 — DRIVE APPARATUS

103 — TRACK BUFFER

105

EP 1 553 595 A1

## FIG. 29A  ⌒ MEDIA OBJECT MANAGER 1200

| FIELD NAME | CONTENTS |
|---|---|
| const unsigned int(16) DataType | TYPE OF MO_MGR (FIXED VALUE) |
| unsigned int(16) DataSize | SIZE OF MO_MGR |
| unsigned int(32) ModTime ⌒1201 | UPDATE DATE/TIME INFORMATION |
| unsigned int(32) PlayBackDuration | TOTAL PLAYBACK TIME LENGTH OF ALL MEDIA OBJECTS(ms) |
| RESUME_MARK ResumeMark ⌒1210 | RECORDING RESUME INFORMATION |
| unsigned int(16) NumMoInfo | NUMBER OF SETS OF MEDIA OBJECT INFORMATION(MO_INFO) |
| int i;<br>for(i=0;i<NumMoInfo;i++){<br>  MO_INFO MoInfo ⌒1220<br>} | MEDIA OBJECT INFORMATION TABLE |

## FIG. 29B  ⌒ RECORDING RESUME INFORMATION 1210

| FIELD NAME | CONTENTS |
|---|---|
| unsigned int(32) flags ⌒1210a  1211 | ATTRIBUTE FLAGS |
| unsigned int(32) LastMoUniqueID | LAST UNIQUE ID INFORMATION |
| unsigned int(64) LastRecLBN  1212 | LAST RECORDING POSITION INFORMATION |
| OBJ_ID LastRecMo ⌒1213 | LAST RECORDED FILE IDENTIFYING INFORMATION |
| unsigned int(16) PrgInfoNum ⌒1214 | CLASSIFICATION GROUP INFORMATION |
| unsigned int(32) LastRecTime ⌒1215 | RECORDING DATE/TIME INFORMATION |

## FIG. 29C  ⌒ ATTRIBUTE FLAGS 1210a

| FIELD NAME | CONTENTS |
|---|---|
| LOOP RECORDING FLAG | SHOWING WHETHER LOOP RECORDING WAS EMPLOYED FOR RECORDING LAST RECORDED FILE |
| FIRST VALID FLAG | SHOWING WHETHER LAST UNIQUE ID INFORMATION 1211 IS VALID |
| SECOND VALID FLAG | SHOWING WHETHER LAST RECORDING POSITION INFORMATION 1212 IS VALID |
| THIRD VALID FLAG | SHOWING WHETHER LAST RECORDED FILE IDENTIFYING INFORMATION 1213 IS VALID |
| FOURTH VALID FLAG | SHOWING WHETHER CLASSIFICATION GROUP INFORMATION 1214 IS VALID |
| FIFTH VALID FLAG | SHOWING WHETHER RECORDING DATE/TIME INFORMATION 1215 IS VALID |

## FIG. 30A

MEDIA OBJECT INFORMATION 1220

| FIELD NAME | CONTENTS |
|---|---|
| unsigned int(16) MoType | TYPE OF MEDIA OBJECT |
| unsigned int(16) Attributes | ATTRIBUTE INFORMATION OF MEDIA OBJECT |
| OBJ_ID MoRef ~1221 | OBJECT REFERENCE INFORMATION |
| unsigned int(32) MoUniqueID ~1222 | MEDIA UNIQUE ID |
| unsigned int(32) PlayBackDuration | PLAYBACK TIME LENGTH OF MEDIA OBJECTS(ms) |
| unsigned int(16) TextID | REFERENCE INFORMATION TO REFERENCE TO TEXT INFORMATION |
| unsigned int(16) ThumID | REFERENCE INFORMATION TO REFERENCE TO REPRESENTATIVE THUMBNAIL IMAGE INFORMATION |

## FIG. 30B

VALUE OF MoType

| VALUE | INTERPRETATION |
|---|---|
| 1 | DIRECTORY |
| 2 | MOVING PICTURE OBJECT(EXTENSION:MOI) |
| 3 | MOVING PICTURE OBJECT(EXTENSION:MPG) |
| 4 | MOVING PICTURE OBJECT(EXTENSION:MEX) |
| 5 | STILL PICTURE OBJECT(EXTENSION:JPG) |
| ... | ... |

## FIG. 30C

VALUE OF OBJ_ID

| BIT | FIELD NAME | INTERPRETATION |
|---|---|---|
| b7 | ParentDirNo | 0:/VIDEO DIRECTORY<br>1:/DCIM DIRECTORY<br>OTHERS:RESERVED |
| b6<br>b4 | DirNo | NUMERIC VALUE PART OF NAME OF UPPER DIRECTORY OF MEDIA OBJECT |
| b3<br>b0 | FileNo | NUMERIC VALUE PART OF FILE NAME OF MEDIA OBJECT |

## FIG. 31A

PROGRAM MANAGER 1300

| FIELD NAME | CONTENTS |
|---|---|
| const unsigned int(16) DataType | TYPE OF PRG_MGR(FIXED VALUE) |
| unsigned int(16) DataSize | SIZE OF PRG_MGR |
| unsigned int(32) PlayBackDuration | TOTAL PLAYBACK TIME LENGTH OF ALL PROGRAM(ms) |
| unsigned int(16) NumPrgInfo | NUMBER OF SETS OF PROGRAM INFORMATION(PRG_INFO) |
| int i;<br>for(i=0;i<NumPrgInfo;i++){<br>PRG_INFO PrgInfo ～1310<br>} | PROGRAM INFORMATION TABLE |

## FIG. 31B

PROGRAM INFORMATION 1310

| FIELD NAME | CONTENTS |
|---|---|
| const unsigned int(16) DataType | TYPE OF PRG_INFO(FIXED VALUE) |
| unsigned int(16) DataSize | SIZE OF PRG_INFO |
| unsigned int(16) Attributes | ATTRIBUTE INFORMATION OF PROGRAM |
| OBJ_ID PrgID | IDENTIFYING INFORMATION OF PROGRAM |
| unsigned int(32) PlayBackDuration | PLAYBACK TIME LENGTH OF PROGRAM(ms) |
| unsigned int(16) TextID | REFERENCE INFORMATION TO REFERENCE TO TEXT INFORMATION |
| unsigned int(16) ThumID | REFERENCE INFORMATION TO REFERENCE TO REPRESENTATIVE THUMBNAIL IMAGE INFORMATION |
| unsigned int(16) NumMoInfo | NUMBER OF SETS OF MEDIA OBJECT INFORMATION (MO_INFO) INCLUDED IN THIS PROGRAM |
| int i;<br>for(i=0;i<NumMoInfo;i++){<br>unsigned int(32) MoID ～1311<br>} | REFERENCE TABLE TO REFERENCE TO MEDIA OBJECT INFORMATION |

## FIG. 32

300
ROOT

301
VIDEO

303
INFO

1300
INFO0001.PRG

304
100ABCDE

ABCD0001.MOI

1142
ABCD0001.MPG

1141
ABCD0001.MEX

1143

200FGHIJ

302
DCIM

300ABCDE

ABCD0001.JPG

1200
INFO0001.MGR

MoInfo[1]
MoType=1
MoRef=0b01000000
MoUniqueID=100

MoInfo[2]
MoType=2
MoRef=0b01000001
MoUniqueID=101

MoInfo[3]
MoType=3
MoRef=0b01000001
MoUniqueID=102

MoInfo[4]
MoType=4
MoRef=0b01000001
MoUniqueID=103

MoInfo[10]
MoType=1
MoRef=0b13000000
MoUniqueID=200

MoInfo[11]
MoType=5
MoRef=0b13000001
MoUniqueID=201

# FIG. 33

1200

**MOI MGR**

MoInfo[1]
MoType=1
MoUniqueID=100

MoInfo[2]
MoType=2
MoUniqueID=101

MoInfo[3]
MoType=3
MoUniqueID=102

MoInfo[4]
MoType=4
MoUniqueID=103

MoInfo[5]
MoType=2
MoUniqueID=104

MoInfo[6]
MoType=3
MoUniqueID=105

⋮

MoInfo[11]
MoType=5
MoUniqueID=201

⋮

MoInfoO[NumMoInfo]
...

1300

**PRG MGR**

PrgInfo[1]
NumMoInfo=3
MoID[ ]=
{101, 104, 201}

PrgInfo[2]
NumMoInfo=2
MoID[ ]=
{104, 201}

⋮

PrgInfo[NumPrgInfo]
...

## FIG. 34A

ATTRIBUTE INFORMATION
ALLOCATION AREA          2001          2002          (SPACE AREA)

2000

2003  2005  2004  2006    SPACE AREA
                          SEARCH

PARTITION SPACE           LAST RECORDING POSITION

## FIG. 34B

ATTRIBUTE INFORMATION
ALLOCATION AREA          2001          2002          (SPACE AREA)

2000

2003  2005  2004  2006  2007  2008

LAST RECORDING POSITION

## FIG. 34C

ATTRIBUTE INFORMATION
ALLOCATION AREA      2001    2002    2011    2012    (SPACE AREA)

2000

2003  2005  2004  2006  2013  2014

LAST RECORDING POSITION

# FIG. 35

ATTRIBUTE INFORMATION
ALLOCATION AREA                    2001    2002   2021   2022   (SPACE AREA)

| 2000 | 2020 |

2003  2005  2004  2006  2023  2024

LAST RECORDING POSITION

## FIG. 36

START

DETERMINING LAST RECORDED FILE ⟋S1001

⟋S1002
LAST RECORDED FILE EXISTS ON RECORDING MEDIUM? — NO

YES ⟋S1004
DETERMINING LAST RECORDING POSITION FROM EFE OF LAST RECORDED FILE

⟋S1003
PERFORMING EXCEPTIONAL PROCESSING

END

FIG. 37

```
                    ┌──────────┐
                    │  START   │
                    └────┬─────┘
                         │
                         ▼
        ┌─────────────────────────────┐   S2001
        │ DETERMINING START POSITION  │
        │ OF SPACE AREA SEARCH        │
        └──────────────┬──────────────┘
                       │
                       ▼
        ┌─────────────────────────────┐   S2002
        │ PERFORMING SPACE AREA       │
        │ SEARCH                      │
        └──────────────┬──────────────┘
                       │        S2003
                       ▼
                 ◇─────────────◇        NO
              ◇  SPACE AREA EXISTS? ◇──────────────┐
                 ◇─────────────◇                   │
                       │ YES                       │
                       ▼                           │
        ┌─────────────────────────────┐   S2005    │
        │ RECORDING MPG AND MEX       │            │
        └──────────────┬──────────────┘            │
                       │                           │
                       ▼                           │
        ┌─────────────────────────────┐   S2006    │
        │ RECORDING MOI               │            │
        └──────────────┬──────────────┘            │
                       │       S2007               ▼        S2004
        ┌─────────────────────────────┐   ┌──────────────────┐
        │ UPDATING MEDIA OBJECT       │   │ PERFORMING       │
        │ MANAGER                     │   │ EXCEPTIONAL      │
        └──────────────┬──────────────┘   │ PROCESSING       │
                       │                  └────────┬─────────┘
                       ▼◄──────────────────────────┘
                  ┌──────────┐
                  │   END    │
                  └──────────┘
```

68

## FIG. 38A

ATTRIBUTE INFORMATION
ALLOCATION AREA

3007

3001    3002    (SPACE AREA)

3000

PARTITION SPACE    3003 3005 3004 3006    LAST RECORDING POSITION

## FIG. 38B

ATTRIBUTE INFORMATION
ALLOCATION AREA

3001    3002    (SPACE AREA)

3000

3003 3005 3008 3009    LAST RECORDING POSITION

## FIG. 38C

ATTRIBUTE INFORMATION
ALLOCATION AREA

3001    3002    3011    3012 (SPACE AREA)

3000 3010

3003    3004 3006    3014    3016

3005    3013    3015

LAST RECORDING POSITION

# FIG. 39

```
ROOT  ─300
  │
  └── VIDEO  ─301
        │
        ├── INFO  ─303 ──┬── INFM0001.MGR  ─1200
        │                ├── INFM0001.PRG  ─1300
        │                └── INFM0002.MGR  ─5000
        │
        ├── 100ABCDE ─1130 ──┬── ABCD0001.MOI  ─1142
        │                    ├── ABCD0001.MPG  ─1140
        │                    ├── ABCD0001.MEX  ─1141 ─1143
        │                    ├── ABCD0002.MOI
        │                    ├── ABCD0002.MPG
        │                    ├── ABCD0002.MEX  ─1150
        │                    ├── ABCD0003.MPG
        │                    └── ABCD0003.MEX
        │
        └── 200FGHIJ ─1131 ── EFGH1000.JPG
                                    ⋮
  │
  └── DCIM ─302 ──┬── 300ABCDE ─1132 ── ABCD0001.JPG  ─1160
                  │                           ⋮
                  └── 400FGHIJ ── EFGH0002.JPG
                                        ⋮
```

## FIG. 40A

| Implementation Use Extended Attribute | | | |
|---|---|---|---|
| BP | LENGTH | FIELD NAME | CONTENTS |
| 0 | 4 | Attribute Type | LB32=2048 |
| 4 | 1 | Attribute Subtype | Uint8=1 |
| 5 | 3 | Reserved | 00hy bytes |
| 8 | 4 | Attribute Length | LB32 |
| 12 | 4 | Implementation Use Length(IU_L) | LB32 |
| 16 | 32 | Implementation Identifier | EntityID |
| 48 | IU_L | Implementation Use ～6000 | bytes |

## FIG. 40B

| Media Object Management Information of Implementation Use field | | | |
|---|---|---|---|
| BP | LENGTH | FIELD NAME | CONTENTS |
| 0 | 2 | Header Checksum | LB16 |
| 0 | 16 | ResumeMark ～6100 | RESUME_MARK |

EP 1 553 595 A1

## INTERNATIONAL SEARCH REPORT

| International application No. |
|---|
| PCT/JP03/12199 |

**A. CLASSIFICATION OF SUBJECT MATTER**
Int.Cl$^7$  G11B27/10, 20/10, 27/00

According to International Patent Classification (IPC) or to both national classification and IPC

**B. FIELDS SEARCHED**

Minimum documentation searched (classification system followed by classification symbols)
Int.Cl$^7$  G11B27/00-27/34, 20/10

Documentation searched other than minimum documentation to the extent that such documents are included in the fields searched
| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 11-259958 A  (Sony Corp.), 24 September, 1999 (24.09.99), | 1-12,14, 17-19 |
| A | Par. Nos. [0023] to [0026] & CN 1232264 A | 13,15-16 |
| Y | JP 11-134842 A  (Sony Corp.), 21 May, 1999 (21.05.99), Full text; all drawings (Family: none) | 1-12,14, 17-19 |
| Y | JP 2002-208227 A  (Toshiba Corp.), 26 July, 2002 (26.07.02), Par. No. [0053] & WO 49803 A          & US 2001-10664 A1 | 3-11 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 October, 2003 (28.10.03) | 11 November, 2003 (11.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
|---|
| PCT/JP03/12199 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2002-251829 A  (Toshiba Corp.),<br>06 September, 2002 (06.09.02),<br>Par. No. [0312]<br>(Family: none) | 4 |
| Y | JP 11-203837 A  (Sony Corp.),<br>30 July, 1999 (30.07.99),<br>Par. No. [0071]<br>(Family: none) | 6 |
| Y | JP 2001-101789 A  (Sony Corp.),<br>13 April, 2001 (13.04.01),<br>Par. No. [0078]<br>(Family: none) | 7,9,11 |
| Y | JP 2002-25235 A  (Hitachi, Ltd.),<br>25 January, 2002 (25.01.02),<br>Par. No. [0028]<br>(Family: none) | 10 |
| Y | JP 2000-268497 A  (Matsushita Electric Industrial<br>Co., Ltd.),<br>29 September, 2000 (29.09.00),<br>Par. No. [0040]<br>(Family: none) | 14 |

Form PCT/ISA/210 (continuation of second sheet) (July 1998)